# EUROPÄISCHE PATENTSCHRIFT

(11) **EP 0 850 269 B1**
(45) Veröffentlichungstag und Bekanntmachung des Hinweises auf die Patenterteilung: **15.01.2003**
(21) Anmeldenummer: 95932728.9
(22) Anmeldetag: 12.09.1995
(51) Int. Cl.: C08L 3/02, B65D 65/46, C08J 7/04

(54) **VERFAHREN ZUR HERSTELLUNG VON FORMKÖRPERN AUS BIOLOGISCH ABBAUBAREM MATERIAL UND FORMKÖRPER**
METHOD OF PRODUCING SHAPED BODIES, IN PARTICULAR FOR PACKAGING, AND SHAPED BODIES
PROCEDE DE PRODUCTION DE CORPS MOULES A PARTIR DE MATERIAU BIODEGRADABLE ET CORPS MOULES AINSI PRODUITS

(30) Priorität: 26.01.1995 WO PCT/EP95/00285
(43) Veröffentlichungstag der Anmeldung: 01.07.1998
(73) Patentinhaber: Apack AG für biologische Verpackungen, 91459 Markt Erlbach (DE)
(72) Erfinder: WISSMÜLLER, Friedrich, D-90592 Schwarzenbruck (DE); BÜTTNER, Erhard, D-01445 Radebeul (DE); SCHÖNBERG, Brunhilde, D-01445 Radebeul (DE); DUBBERT, Frank, D-01468 Reichenberg (DE); KÖBLITZ, Thomas, D-91463 Dietersheim (DE); BAAR, Andreas, D-25469 Halstenbek (DE)
(74) Vertreter: Rupp, Christian, Dipl.Phys.
(86) Internationale Anmeldenummer: EP9503592
(87) Internationale Veröffentlichungsnummer: WO96023026

(56) Entgegenhaltungen:
- EP-A- 0 474 095
- WO-A-94/13734
- WO-A-95/20628
- DE-C- 4 135 330

## Beschreibung

Die Erfindung betrifft ein Verfahren zur Herstellung von Formkörpern, insbesondere Verpackungsformkörpern, aus biologisch abbaubarem Material sowie einen Formkörper nach diesem Verfahren. Insbesondere betrifft die Erfindung ein Verfahren zur Herstellung von Formkörpern zur Verwendung als recyclefähige, biologisch abbaubare Verpackungen, die biologisch abbaubares Fasermaterial enthalten und die z.B. zur Aufnahme von feuchten Nahrungsmitteln hinreichend wasserfest sind und den klimatischen Anforderungen der Einsatzgebiete entsprechen.

In Haushalt und Industrie fallen in großer Menge Altpapier sowie zellulosefaser- und stärkehaltige Produktionsrückstände in großer Menge an. Aus Gründen des Umweltschutzes und der Schonung natürlicher Ressourcen wird in steigendem Umfang auch recyceltes Altpapier als Ausgangsmaterial für die Papierherstellung wiederverwendet.

Andererseits besteht das dringende Bedürfnis, insbesondere im Verpackungsbereich, aber auch auf anderen Gebieten Formkörper zu verwenden, die die Abfallwirtschaft nur in geringem Maße beanspruchen, die zur Wiederverwertung aufschließbar (recyclebar) sind und z.B. im Rahmen der Kompostierung im wesentlichen rückstandsfrei biologisch abbaubar sind. Altpapier sowie zellulosefaser- und stärkehaltige Produktionsrückstände, wie z.B. Holzoder Papierschliff wie auch entfärbtes Altpapier (Deinking-Material) kommen daher auch als Grundstoffe für die Herstellung von Formkörpern als Verpackungsmittel in Betracht. Bei der Verpackung von Lebensmitteln werden aus recyceltem Altpapier hergestellt Produkte einer speziellen Oberflächenbehandlung unterworfen, um den hygienischen Anforderungen zu genügen. Bei ausschließlicher Verwendung von unverschutztem Altpapier aus der industriellen Verarbeitung kann eine solche Behandlung bei Einhaltung von gesetzlich festgelegten Produktions-Rahmenbedingungen entfallen.

Es sind daher flache Schalen oder Deckel aus Karton, der unter ausschließlicher oder teilweiser Verwendung von Altpapier hergestellt wurde, bekannt. Dieser Karton wird gestanzt und durch entsprechende Stempel verformt. Der erzielbaren Formenvielfalt werden durch die Materialbeschaffenheit allerdings enge Grenzen gesetzt, da Karton nur sehr bedingt verformbar ist.

Zur Vermeidung dieses Nachteils werden in zunehmendem Maße geformte Verpackungen nach dem Faserguß-Verfahren hergestellt, das auf den Grundlagen der konventionellen Papierherstellung basiert. Dabei werden Fasersuspensionen aus zerkleinertem Altpapier und Wasser bereitet und auf Formsiebe gegeben. Anschließend wird das Wasser entzogen und der Formling getrocknet, gegebenenfalls kann er auch einer verdichtenden Preßbehandlung unterzogen werden. Nachteilig ist hierbei, daß die Durchführung dieses Verfahrens, wie es beispielsweise aus der DE 40 35 887 bekannt ist, sehr aufwendig ist und durch den hohen Wasserbedarf die Umwelt belastet. Auch in der jüngsten Zeit hat es nicht an Versuchen gefehlt, geformte Verpackungen, die aus Kunststoff gefertigt werden und insbesondere für die Verpackung von Lebensmitteln geeignet sind, durch Produkte auf der Basis von Altpapier zu ersetzen.

So ist aus der DE-OS 39 23 497 die Herstellung einer mehrschichtigen Verpackungsschale für Lebensmittel bekannt, deren Trägerschicht überwiegend aus Recycling-Material auf der Basis von Altpapier besteht. Als Bindemittel ist hierbei ein Anteil an geschäumtem Kunststoff notwendig. Die Herstellung solcher Verpackungsschalen erfordert ein verhältnismäßig aufwendiges, mehrstufiges Verfahren, bei dem zerkleinertes Altpapiermaterial über einen Extruder zu einer bahnförmigen Trägerschicht geführt und anschließend im Verbund mit einer Deckschicht durch Tiefziehen bzw. Pressen zu Verpackungsschalen geformt wird. Während der Herstellung muß eine gesteuerte, dosierte Zugabe von Kunststoffgranulaten als Bindemittel in der Trägerschicht erfolgen. Aufgrund des Kunststoffeinsatzes besteht eine solche Verpackungsschale in nachteiliger Weise nicht aus vollständig verrottbarem, organischem Material. Überdies ist die Herstellung aufgrund der aufwendigen Verfahrensführung kostenintensiv.

Verpackungen auf Waffelteigbasis, sowohl als eßbare Verpackungen als auch, in Abhängigkeit von den verwendeten Zuschlagstoffen, als nicht-eßbare Verpackungen, sind ebenfalls bekannt (EP 513 106). Schwierigkeiten bestehen hierbei hinsichtlich der Langlebigkeit, Elastizität, Bruchfestigkeit und Haltbarkeit solcher Verpackungen.

Es ist schließlich auch bekannt, geformtes Verpackungsmaterial im wesentlichen auf Stärkebasis unter Verwendung von modifizierter Stärke unter Aufschmelzung der Stärke und anschließender Extrusion und Abkühlung herzustellen (EP 0 304 401 B1). Die Prokukteigenschaften des so gewonnenen Verpackungsmateriales sind allerdings für viele Zwecke aufgrund der doch verhältnismäßig niedrigen Bruchfestigkeit von Verpackungen auf Stärkebasis und deren hygroskopischen Eigenschaften nicht vollständig zufriedenstellend.

Bei der Verpackung von Lebensmitteln in biologisch abbaubaren Verpackungen spielt die Sperrwirkung solcher Verpackungsmittel gegenüber Wasser, Wasserdampf, Fetten, Sauerstoff oder Milchsäure und Aromen eine bedeutende Rolle. Überwiegend weisen biologisch abbaubare Verpackungen nur eine ungenügende Widerstandsfähigkeit gegenüber diesen Medium auf, so daß sie auf vielen Gebieten Einweg-Verpackungen aus Kunststoffen oder Kunststoffverbunden nicht gleichwertig sind.

Zur Verpackung flüssiger Lebensmittel ist es daher bekannt, einen biologisch abbaubaren Verpackungswerkstoff zu schaffen, der eine sauerstoffsperrende Kernschicht aus Polyvinylalkohol aufweist, die beiderseits mit einem biologisch abbaubaren Kunststoff, z.B. Polyhydroxylbutyrat beschichtet ist, wobei diese biologisch abbaubaren Kunststoffschichten wiederum zum Schutz gegen Umgebungsbedingungen mit langzeit-wasserfesten Schichten, z.B. aus Cellulosederivat und/oder Papier beschichtet sind (EP 0 603 876 A1). Die Herstellung derartiger Verbundfolien ist verhältnismäßig aufwendig und führt nicht zu dreidimensionalen Formkörpern.

Aus der WO94/1373 ist ein Verfahren zum wasserabweisenden bzw. wasserdichten Beschichten von Formkörpern bekannt, wobei ein Lack aufgebracht wird und wobei aus der Oberflächenschicht des zu beschichtenden Formkörpers das adsorbierte Hydratwasser teilweise entfernt wird, worauf das zur Lackaufbringung verwendete Lösungsmittelgemisch unter Aufrechterhaltung eines Mindestfeuchtegehaltes des Substrats von 5 Gew.-% bis zur Geruchsfreiheit entfernt wird.

Die WO95/20628 offenbart ein Verfahren zur Herstellung von Formkörpern unter Verwendung einer viskosen Masse aus biologisch abbaubaren Fasermaterial, Wasser und Stärke, die unter Ausbildung eines Fasermaterial-Stärke-Verbundes in einer Form gebacken wird.

Aus der EP 0 474 095 A1 ist eine Zusammensetzung zum Herstellen biologisch abbaubarer Gebrauchsgegenstände bekannt, die Stärke und maximal 40 Gew.-% Wasser enthält, wobei die Stärke als Bestandteil zerkleinerter Naturprodukte mit den anderen Bestandteilen dieser Naturprodukte vorliegt.

Die DE 41 35 330 C1 offenbart einen Baustoff, der ein Gemenge aus Altpapier, Wasser und Stärke ist, welches durch Hitze- und Druckeinwirkung zu einem festen holzartigen Produkt verarbeitet wird.

Der Erfindung liegt daher die Aufgabe zugrunde, ein Verfahren zur Herstellung von Formkörpern aus biologisch abbaubarem Material und einen solchen Formkörper anzugeben, das in kostengünstiger und einfacher Weise durchführbar ist und zu einem Formkörper, insbesondere für Verpackungszwecke, aus vollständig verrottbarem, biologisch abbaubarem Material führt, der sich durch eine hohe Oberflächengüte und geringe Porigkeit, strukturelle Festigkeit und Elastizität sowie hinreichende Eigenschaften seiner Oberfläche auszeichnet, so daß er zur Aufnahme von flüssigen und/oder fetthaltigen Lebensmitteln unterschiedlicher Temperatur geeignet ist.

Diese Aufgabe wird durch ein Verfahren gemäß Anspruch 1 gelöst.

Die Randschicht wird dabei als eine im Anschluß an das Backen des Formkörpers aufgebrachte, biologische, abbaubare, flüssigkeitsdichte Folien-Beschichtung ausgebildet, z.B. durch Tauchen, Aufsprühen eines hydrophoben Stoffes enthaltenden Lösung oder unter Wärmebehandlung, insbesondere durch Bepulvern oder Aufschmelzen hydrophober Stoffe wie z.B. Cellulosederivate wie Celluloseacetate und Nitrocellulose enthaltenden Pulvers, Granulates oder von Pellets. Vorzugsweise kann bei der Beschichtung der Formkörper bereits abgekühlt sein oder diese auch auf den noch vom vorangehenden Backvorgang heißen Formkörper erfolgen.

Vorzugsweise enthält die Beschichtung Cellulosederivate, insbesondere Celluloseacetat und Nitrocellulose.

Nach einer anderen, bevorzugten Ausführungsform des erfindungsgemäßen Verfahrens kann der das Faser/Faserbündel-Gemisch enthaltende Formkörper aus biologisch abbaubaren Fasern oder Faserbündeln auch durch Aufbringen einer flüssigkeitsabweisenden, insbesondere Celluloseacetat, Zellglas, synthetisch oder biologisch hergestellter und biologisch abbaubarer Polyester, Polyesterderivate oder Polycaprolacton enthaltende Folie, die vorzugsweise unter Einsatz eines Haftvermittlers innig z.B. unter Anwendung von Vakuum, Druckluft oder durch mechanisches Aufpressen mit dem gebackenen Formkörper verbunden wird, mit der flüssigkeitsdichten Randschicht versehen werden.

Nach einer anderen bevorzugten Ausführungsform des erfindungsgemäßen Verfahrens wird zur Hydrophobierung der Backmasse dieser ein hydrophober Stoff oder ein Gemisch solcher Stoffe, wie z.B. Cellulosederivate, Polyalkylencarbonat, Polyvinylalkohol, synthetisch oder biologisch hergestellte und biologisch abbaubare Polyester oder Polyesterderivate, insbesondere Polycaprolacton, Polyhydroxybutyrat, Polyhydroxybutyrat/Hydroxyvaleratcopolymer und/oder Polyalkylsuccinat sowie desweiteren Polyfluorkohlenstoffe, insbesondere fluorierte Harze und/oder hydrophobe Polyether oder Polyester mit aliphatischen Gruppen mit 3 bis 17 Kohlenstoffatomen oder biologisch abbaubare Kunststoffe beigegeben, so daß der gebackene Formkörper am Ende des Backvorganges bereits selbst hydrophobe Eigenschaften und insbesondere eine entsprechende, das Eindringen von Flüssigkeit jedenfalls für einen hinreichenden Zeitraum verhindernde Randschicht aufweist.

Nach einem bevorzugten Verfahren kann für eine zumindest zeitweilige, gegen kalte oder heiße Flüssigkeiten sperrende Beschichtung des gebackenen Formkörpers dieser zunächst mit Dampf konditioniert werden, anschließend ein Haftvermittler aufgetragen und im Anschluß hieran die Beschichtung aufgebracht werden, wobei sich an den Beschichtungsvorgang noch ein vorzugsweise mit Heißdampf ausgeführter Sterilisationsvorgang anschließt.

Nach anderen Ausführungsbeispielen des erfindungsgemäßen Verfahrens, wie sie insbesondere in den Ansprüchen 21-30 dargelegt sind, kann in Abhängigkeit von der gewählten Auftragtechnik und den verwendeten Materialien, z.B. dem Aufsprühen von Flüssigkeiten auf den kalten oder heißen Formkörper oder das Aufschmelzen von Pulverbeschichtungen der Einsatz eines Haftvermittlers auch entfallen, so daß der gebackene Formkörper im Anschluß an den Backvorgang konditioniert und direkt flüssigkeitsabweisend beschichtet wird, vorzugsweise gefolgt von einer Dampfsterilisation.

Hinsichtlich der Vorbereitung der Backmasse besteht der Formkörper im wesentlichen aus biologisch abbaubarem Fasermaterial, das mit Stärke zu einem Fasermaterial- Stärke-Verbund aufgrund der Verkleisterung der Stärke verfestigt ist.

In Abhängigkeit von den verwendeten Ausgangsmaterialien, d.h. dem faserhaltigen Rohmaterial bzw. der Art der biologisch abbaubaren Fasern, die auch unmittelbar verwendet werden können, und dem vorgesehenen Einsatzzweck sowie in Abhängigkeit von der Verpackungsgestalt (Formtiefe während des Backprozesses) ergibt sich ein variables Feld von Prozeßparametern sowohl hinsichtlich der Mischungsverhältnisse der Einsatzstoffe Wasser, biologisch abbaubares Fasermaterial und Stärke, sowie der verwendeten Zerkleinerungs-Egalisierung und Backtechnologie.

Nach einer bevorzugten Ausführungsform des erfindungsgemäßen Verfahrens kann dieses mit einem verhältnismäßig hohen Anteil an Fasermaterial, d.h. an Altpapier und zellulosefaser- und stärkehaltigen Produktionsrückständen, bzw. anderen biologisch abbauren Fasermaterialquellen, wie z.B. Rübenschnitzel, verwendet werden, wobei dennoch hervorragende Produkteigenschaften der auf dieser Weise hergestellten Formkörper als Verpackungsmaterialien erreicht werden. Die Formkörper bzw. das so hergestellte Verpackungsmaterial sind rasch biologisch abbaubar und können ohne großen Aufwand recycelt werden. Die Verwendung von Altpapier und zellulosefaser- und stärkehaltigen Produktionsrückständen, wie z.B. Holz- und Papierschliff, Rübenschnitzeln oder dergl. führt auch schon bei verhältnismäßig geringem Stärkeanteil unter Endverarbeitung der egalisierten, viskosen Masse in einer abschließenden Back-Verfahrensstufe, die Elemente der Waffelbacktechnologie nutzt, zu einem überraschend hochwertigen, und durch die Ausbildung eines Fasermaterial-Stärke-Verbundes auch äußerst haltbaren, dabei elastischen Formkörper, insbesondere für Verpackungszwecke, bei zugleich kostengünstiger und umweltschonender Herstellung.

Bevorzugte Ausgestaltungen des erfindungsgemäßen Verfahrens sowie von Kompositionen des Formkörpers sind in den Unteransprüchen dargestellt.

Hinsichtlich des Formkörpers wird die vorgenannte Aufgabe durch einen Formkörper gemäß Anspruch 71 gelöst.

Die Randschicht besteht aus einer im Anschluß an das Backen des Formkörpers aufgebrachten Beschichtung mit einem hydrophoben Material, insbesondere Celluloseacetat, Alignat in Verbindung mit Calciumverbindungen, insbesondere Calciumchlorid, als Fixiermittel, Polyalkylencarbonat, synthetisch oder biologisch hergestellter und biologisch abbaubarer Polyester und Polyesterderivate, Polycarprolacton, Polyvinylacetat, Nitrocellulose oder Polyvinylalkohol. Diese Stoffe können vorzugsweise als heiße Lösung mit Chloroform, Aceton oder Ethylenacetat als Lösungsmittel verwendet werden.

Der Formkörper weist vorzugsweise eine poröse Innenstruktur auf, die durch eine periphere Hautschicht größerer Dichte abgeschlossen ist, wobei die Hautschicht, vorzugsweise unter Zwischenlage einer Haftvermittlerschicht, die flüssigkeitsdichte Beschichtung trägt.

Bevorzugte Ausgestaltungen des erfindugsgemäßen Formkörpers sind in den übrigen Unteransprüchen dargelegt.

Die Erfindung wird nachstehend anhand von Ausführungsbeispielen und zugehörigen Zeichnungen näher erläutert. In diesen zeigen:
- Fig. 1: ein Ablaufdiagramm des Verfahrens zur Formkörperherstellung auf der Grundlage des Einsatzes von Altpapier als faserhaltigem Rohmaterial,
- Fig. 2: ein Ablaufdiagramm eines weiteren Ausführungsbeispieles zur Formkörperherstellung auf der Grundlage der Verwendung von bereits vorzerkleinertem, entfärbtem Altpapiermaterial (Deinking-Material),
- Fig. 3: ein Ablaufdiagramm für ein weiteres Ausführungsbeispiel eines Verfahrens zur Formkörperherstellung auf der Basis der Verwendung von Produktionsabfällen als faserhaltigem Rohmaterial, wie Papierschliff, Rübenschnitzel, Holzschliff etc.,
- Fig. 4: eine Tabelle für verschiedene Probenmuster mit unterschiedlichem Einsatz nativer Stärke und konstantem Wasseranteil, bezogen jeweils auf die Trockenmasse des Fasermateriales,
- Fig. 5: eine Tabelle für verschiedene Probenmuster mit unterschiedlichem Einsatz nativer Stärke sowie vorverkleisterter Stärke bei konstantem Wasseranteil, bezogen jeweils auf die Trockenmasse des Fasermateriales,
- Fig. 6: eine Tabelle und eine entsprechende grafische Darstellung der Klassierungen der Länge des verwendeten Fasermateriales,
- Fig. 7: ein Druck-Zeit-Diagramm für einen Backvorgang zur Herstellung eines Formkörpers nach einem der vorgenannten Verfahren,
- Fig. 8: eine Tabelle zur Produktbewertung von Formkörpern in Abhängigkeit von der Formtiefe der verwendeten Backform und in Abhängigkeit von klassiertem Fasermaterial,
- Fig. 9: eine Tabelle zur Produktbewertung von Formkörpern in Abhängigkeit von der Formtiefe der verwendeten Backform und in Abhängigkeit von Fasermaterialgemischen mit unterschiedlicher Länge der Fasern bzw. Faserbündel,
- Fig.10: eine Rezepturtabelle für die Herstellung von Formkörpern auf der Basis von Altpapier als faserhaltigem
- Fig.11: Ablaufdiagramme von drei Ausführungsbeispielen I bis III für Beschichtungsverfahren von Formkörpern,
- Fig.12: eine vergrößerte Querschnittsdarstellung eines Wandabschnittes eines gemäß Verfahren nach Fig. 11 hergestellten Formkörpers, und
- Fig.13: bis Fig.16 verschiedene Ausführungsformen von Formkörpern, die nach Ausführungsbeispielen des erfindungsgemäßen Verfahrens hergestellt wurden.

Im Rahmen der vorliegenden Anmeldung wird der Begriff Fasermaterial oder Faserstruktur sowohl für die Aufschließung bis auf Einzelfasern als auch für das Aufschließen bis auf lediglich verhältnismäßig große Faserbündel des faserhaltigen Rohmateriales verwendet.

Im Rahmen der vorliegenden Anmeldung umfaßt der Begriff "flüssigkeitsdicht" eine Eigenschaft, die durch die Hydrophobierung des Formkörpers in Abhängigkeit von der Beschichtung auch nur für einen bestimmten, gegebenenfalls verhältnismäßig kurzen Zeitraum gegeben sein kann. So kann auf diese Weise eine Flüssigkeitsresistenzeigenschaft des Formkörpers bezeichnet werden, die dieser bei Raumtemperatur (25-40°C) und einer relativen Feuchtigkeit der Umgebung von 0-90% für mehrere Tage aufweist (Anwendungsklasse A1). Als "flüssigkeitsdicht" im Rahmen der vorliegenden Anmeldung wird auch eine Kaltwasserfestigkeit für 24 Stunden bezeichnet, wobei das Packgut Raumtemperatur (25-40°C) oder weniger als Raumtemperatur aufweist (Anwendungsklasse A2). Schließlich bezeichnet die Ausbildung einer biologisch abbaubaren, flüssigkeitsdichten Randschicht (vorzugsweise Beschichtung) auch eine Kochwasserfestigkeit von mindestens von 30 Minuten vorzugsweise 1 Stunde, wobei das Packgut eine Temperatur von 95°C aufweisen kann (Anwendungsklasse A3). Hierbei soll der Formkörper seine Formstabilität nicht verlieren und eine spürbare Penetration von Flüssigkeit in die Formkörperstruktur vermieden sein.

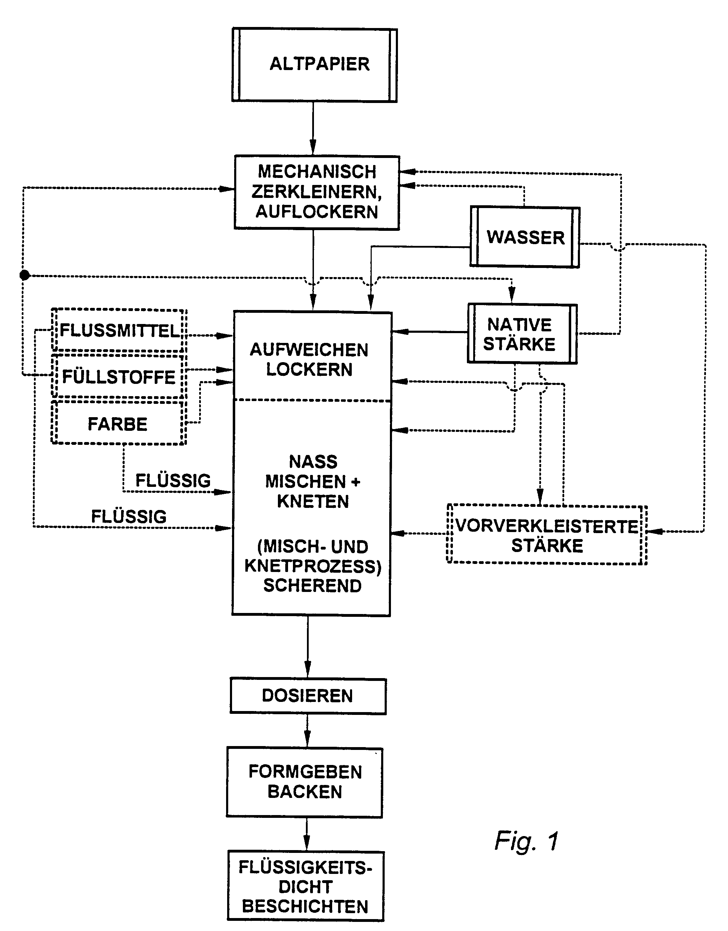

Fig. 1 verdeutlicht ein erstes Ausführungsbeispiel des Verfahrens zur Herstellung von Verpackungsformkörpern auf der Basis von Altpapier.

Dabei sind in Fig. 1 gegebenenfalls zusätzlich vorgesehene Einsatzmaterialien (z.B. vorverkleisterte Stärke, Füllstoffe, Flußmittel, Farbe) oder die Zugabe der Einsatzmaterialien in alternativen Prozeßstufen oder kombinatorisch zu den in Vollinien dargestellten Verwendungsmöglichkeiten durch unterbrochene Linien dargestellt.

In einem ersten Verfahrensschritt wird das Altpapier in trockenem Zustand zerkleinert, wobei diese Zerkleinerung vorzugsweise schonend und nicht-schneidend, sondern z.B. durch Shredder, Häcksler oder Schlagmühlen, wie Stift- oder Hammermühlen erfolgen soll, so daß im wesentlichen die Papierfasern nicht angeschnitten werden, da dies zu einer wesentlich erhöhten Wasseraufnahme im anschließenden Prozeß durch die dann erhöhte Saugfähigkeit der Zellulosefasern des Altpapiers führt. Der Zerkleinerungsvorgang soll zerreißend zu Altpapierschnitzeln in einer Größenordnung von bis zu ca. 10 mm, vorzugsweise bis zu ca. 5 mm, führen. Für dickwandige und/oder großflächige Formkörper können zur Verbesserung der Eigenstabilität Fasern oder bevorzugt gelockerte Faserbündel bis zu 50 mm Faser- bzw. Faserbündellänge verwendet werden. Auch für diesen Anwendungsfall wird ein Gemisch aus längeren Fasern oder Faserbündeln im Bereich von ca. 10 mm bis 50 mm mit kurzen Fasern oder Faserbündeln im Bereich von 0,5 mm bis 20 mm verwendet.

Bei Verwendung längerer Faserbündel sinkt der vorbereitende Zerkleinerungsaufwand entsprechend.

Wie auch bei den übrigen erläuterten Ausführungsbespielen, führt die bevorzugte Auflockerung der Faserbündel zu einer innigeren Verbindung mit der verkleisternden Stärke, die in die Formbündel-Hohlräume eindringen kann, so daß die Ausbildung eines Faser/Faserbündel-Gerüstes (untereinander "vernetzte" Fasern/Faserbündel) durchdringen und überlagert von einer Stärkematrix gefördert und ermöglicht wird, die zu einer hervorragenden inneren Bindung unter den Gegebenheiten eines Wasserdampf unter Druck freisetzenden Backprozesses führt.

Der Zerkleinerungsprozeß wird vorzugsweise so geführt, daß es zu einer Auflockerung der von dem Zerkleinerungsprozeß betroffenen Faserbündel der Altpapierschnitzel kommt.

Das auf diese Weise schonend zerkleinerte, im wesentlichen zerrissene Altpapier wird zum Aufschließen seiner Faserstruktur sodann unter Wasserzugabe und unter Aufweichen und weiterer Lockerung in einem Misch- und Knetprozeß zerfasert und zu einer viskosen Masse egalisiert.

Der Misch- und Knetprozeß, für den vorzugsweise diskontinuierliche oder kontinuierliche Kneter bzw. Mischer und Kneter verwendet werden, erfolgt in Anwesenheit von Wasser.

Da es vorteilhaft ist, in Abhängigkeit von den übrigen Bestandteilen der viskosen Masse und insbesondere in Abhängigkeit vom Stärkeanteil (zu dessen hinreichender Verkleisterung das freie Wasser im wesentlichen benötigt wird) den Wasseranteil möglichst gering zu halten, um den anschließenden Formgebungsvorgang (Backen) effizient durchführen zu können, hat sich gezeigt, daß für viele, bevorzugte Anwendungen (hochfeste Formkörper, dichtes Gefüge) ein Wasseranteil von 2 : 1 bis 3 : 1, bevorzugt von 2,5 : 1, bezogen auf die Trockenmasse des Altpapieres, vorteilhaft ist. Zugleich wird in die Masse native Stärke, z.B. nativer Getreide-, Kartoffel-, Mais- oder Reisstärke gegeben. Der Misch- und Knetprozeß zur Egalisierung dieser viskosen Masse wird ebenfalls zur Faserschonung und damit zur Verminderung der Wasseraufnahme durch die Zellulosefasern praktisch vollständig unter Scherung, d.h. unter Verwendung der Scherkräfte zwischen den Masseteilchen bzw. zwischen den Masseteilchen und einem Knet- oder Mischorgan und damit durch innere Reibung bewirkt, so daß eine schonende Aufschließung der Altpapierschnitzel auf ihre Faserstruktur erfolgt.

Der Begriff "Faserstruktur" umfaßt im Rahmen dieser Anmeldung sowohl die Aufschließung bis auf Einzelfasern als auch das Aufschließen bis auf lediglich verhältnismäßig große, vorzugsweise aufgelockerte Faserbündel des Ausgangsmateriales.

Es wird in vielen Fällen bevorzugt, das Aufschließen lediglich bis auf die Faserbündel vorzunehmen, da es in Verbindung mit der Verkleisterung der Stärke hierdurch zu einer fester vernetzten Struktur und der Ausbildung eines Faserbündel-Stärke-Verbundes kommt.

Das Verhältnis von Stärke zu Fasermaterial kann in der viskosen Masse in weitem Rahmen variieren und insbesondere vom Anwendungsgebiet und den Qualitätsanforderungen an den fertigen Formkörper abhängen.

Für besonders glatte Oberflächen bei hoher Elastizität und, bedingt durch den Einsatz gelockerter Faserbündel, die in erhöhtem Maße zur strukturellen Festigkeit beitragen, kann der Stärkeanteil auch wesentlich über 50% (bezogen auf das Trockengewicht des Altpapieres) liegen.

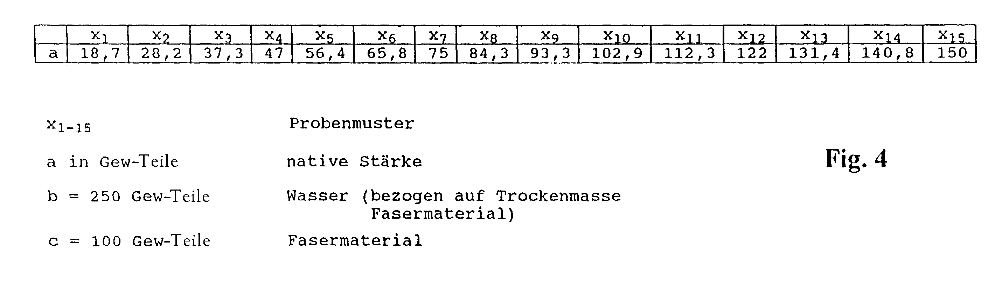

Die Stärke wird vorzugsweise als native Stärke zugemischt. Mischungsverhältnisse zwischen nativer Stärke und Fasermaterial (Altpapier), bezogen auf die Trockenmasse des Altpapieres und unter Einhaltung eines 2,5-fachen Wasserüberschusses, bezogen auf diese Trockenmasse des Altpapieres, sind in Fig. 4 dargestellt.

Innerhalb des in Fig. 1 als zweiten Verfahrensschritt (Knetund Mischprozeß) zur Aufschließung der Altpapierschnitzel auf ihre Faserstruktur (bevorzugt Faserbündel) kann dieser Verfahrensschritt in eine Vorbehandlung der Altpapierschnitzel zur Aufweichung derselben unter Wasserzugabe und weiterer Auflockerung unterteilt werden, wobei auch in diesem Verfahrensstadium Flußmittel, insbesondere Zusätze mit alkalischer Wirkung, zur Verbesserung der Fließeigenschaften der viskosen Masse bei einem anschließenden Backprozeß sowie Füllstoffe oder Farbstoffe wahlweise beigegeben werden können.

Es ist darüber hinaus auch möglich, Füllstoffe mit der nativen Stärke oder Teilen derselben vorzumischen und teilweise bereits während des vorgeschalteten Verfahrensschrittes der Trockenzerkleinerung beizugeben oder auch insgesamt der Mischung während der unter Anwesenheit von Wasser erfolgenden Ausbildung der viskosen Masse unter Durchführung des Misch- und Knetprozesses zum Zerlegen des Altpapieres in seine Faserstruktur beizugeben.

Wie nachstehend noch genauer erläutert wird, ist es in einer besonders vorteilhaften Verfahrensführung auch möglich, zusätzlich zu der nativen Stärke modifizierte oder vorverkleisterte Stärke zu verwenden, um einerseits während eines anschließenden Backprozesses noch eine durch den Vorverkleisterungszustand definierte Wassermenge bereitzustellen bzw. auch bei sehr kurzen Verweilzeiten der Masse im anschließenden Backprozeß eine vollständige Verkleisterung der Stärke zur Bildung eines stabilen Faser-Stärke-Verbundes zu erreichen. Bei Zugabe in Fig. 1 fakultativ zusätzlich eingesetzten vorverkleisterten Stärkeanteiles kann die freie Wasserzugabe eingeschränkt werden.

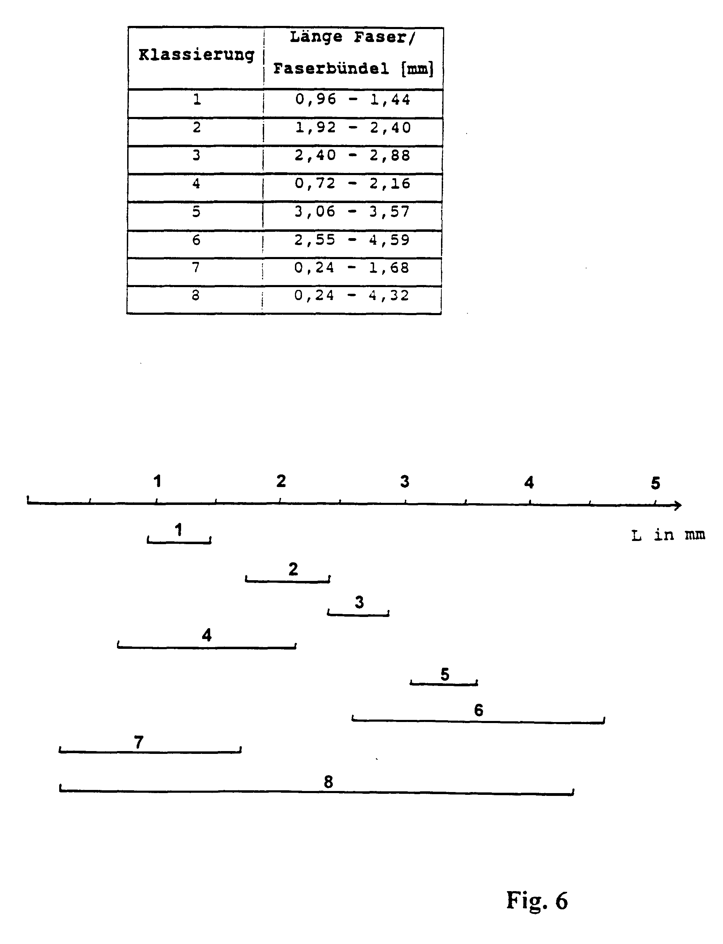

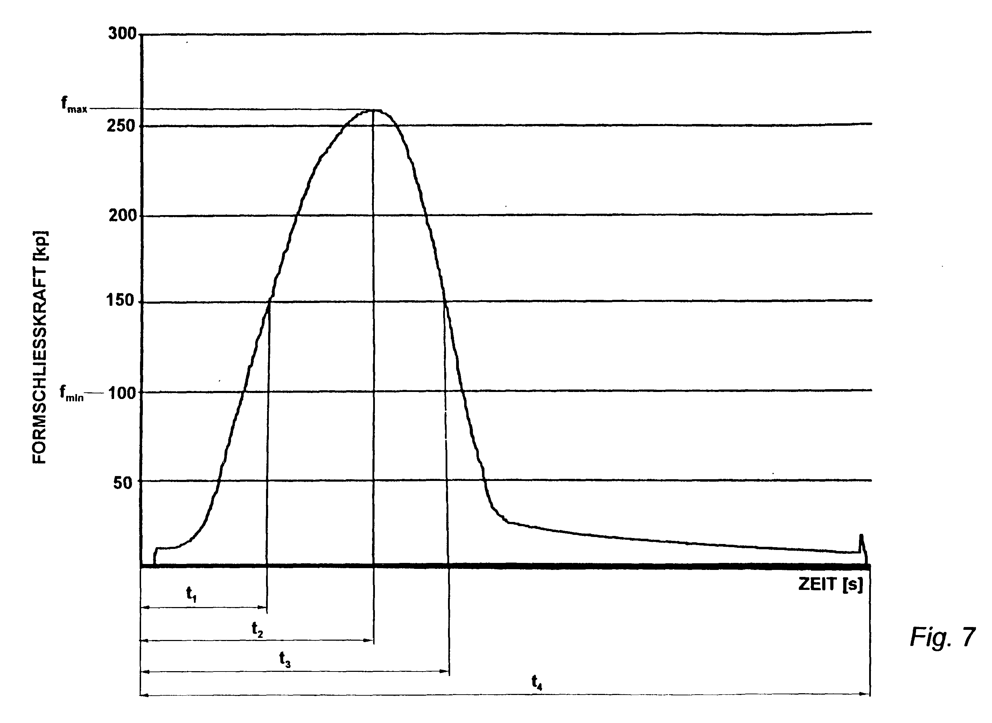

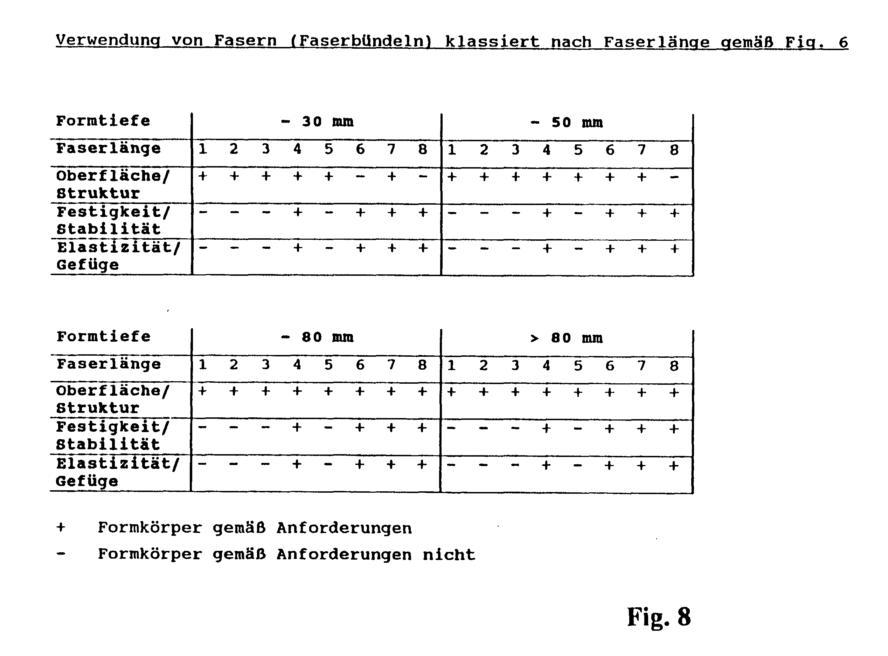

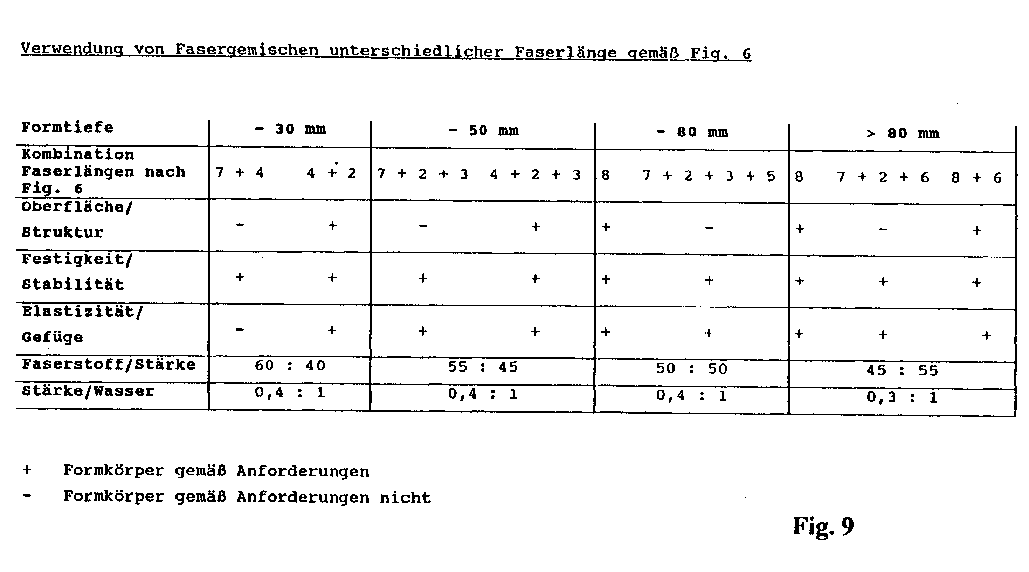

Besonders gute Ergebnisse hinsichtlich Oberflächenqualität, Elastizität, Gefügeaufbau, Struktur und Festigkeit wurden bei den hergestellten Formkörpern dann erreicht, wenn neben einer Mischung aus nativer und vorverkleisterter Stärke zugleich eine Mischung aus Fasermaterial unterschiedlicher Faserlänge, insbesondere unter Verwendung von Faserbündeln unterschiedlicher Länge oder von Faserbündeln in Verbindung mit Einzelfasern (bei Verwendung von faserhaltigem Rohmaterial wie z.B. Altpapier unterschiedlichen Zerkleinerungsgrades) verwendet wurden. Nähere Einzelheiten hierzu werden nachstehend noch mit Bezug auf andere Ausführungsbeispiele erläutert (s. Fig. 6).

Als Füllstoffe kommen insbesondere Kreide, Kaolin, Talkum, Gips, Tonerde, Titandioxid oder Aluminiumoxid in Betracht. Als Flußmittel werden alkalische Zusätze wie Magnesiumcarbonat, Magnesiumhydroxidcarbonat, Natronlauge oder Ammoniumhydroxid verwendet. Das Wasser, vorzugsweise in einem Anteil des 2,5-fachen der Trockenmasse des Altpapiermateriales, wird in einer Menge zugeführt, die zum einen für das Erzielen einer viskosen, fließend-breiigen bis hochviskosen, plastischen Konsistenz der Masse notwendig ist und zum anderen zur Verkleisterung der Stärke in einem anschließenden Backprozeß benötigt wird.

Es kann jedoch auch mit einem höheren Wasserüberschuß gearbeitet werden, insbesondere dann, wenn zusätzlich zur nativen Stärke keine vorverkleisterte Stärke eingesetzt wird. Beim Durchmischen und Kneten der viskosen Masse wird einerseits das Altpapier auf seine Faserstruktur, hier vorzugsweise auf verhältnismäßig große Faserbündel, zerlegt und werden andererseits diese Faserbündel (oder auch Einzelfasern) innig und egalisierend mit der Stärke vermischt und eine innige Verbindung zwischen der aufgeweichten Papierfaserstruktur und der Stärke herbeigeführt.

Anschließend wird nach Egalisierung der viskosen Masse diese bezüglich der nachfolgenden Einführung in zumindest eine Backform dosiert und in die Backform eingegeben. Die Backform wird dabei durch zumindest zwei Backplatten, d.h. eine obere und eine untere Backplatte (aufgenommen in einer Backzange) gebildet, wobei die Innenoberflächen der Backplatten in einem geschlossenen, verriegelten Zustand der Backform unter Bildung eines Formhohlraumes beabstandet gehalten werden und der Formhohlraum durch die viskose Masse ausgefüllt wird. Selbstverständlich können zur gleichzeitigen Herstellung einer Mehrzahl von Formkörpern auch eine Mehrzahl von Backzangen verwendet werden.

In Fig. 4 ist für 15 Probenmuster die Einsatzmenge von nativer Stärke bei konstant gehaltener Wassermenge (das 2,5-fache), bezogen jeweils auf die Trockenmasse des Altpapier-Fasermateriales (Faserbündel) dargestellt.

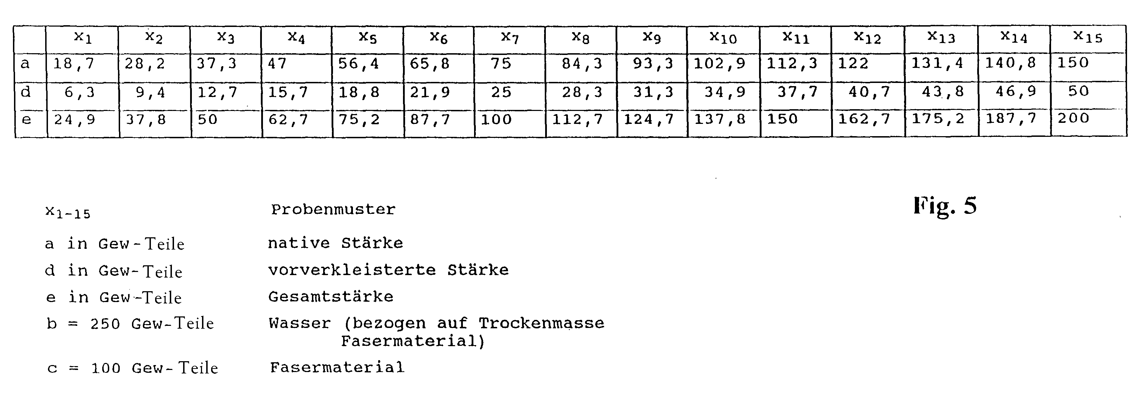

Hinsichtlich der bevorzugten Verwendung einer Mischung aus nativer und vorverkleisterter Stärke gibt die Tabelle gemäß Fig. 5 bevorzugte Verhältnisse des Einsatzes von nativer und vorverkleisterter Stärke wieder. Als vorteilhaft hat sich herausgestellt, wenn das Verhältnis zwischen nativer und vorverkleisterter Stärke ca. 3 : 1 beträgt.

Überdies wurden vorteilhafte Eigenschaften bei den erfindungsgemäß hergestellten Formkörpern dann beobachtet, wenn der Anteil von Stärke zu Wasser in der viskosen Masse ca. 1 : 10 bis 1 : 1, vorzugsweise 1 : 3 bis 1 : 2, betrug.

Der Backprozeß, der in seiner Technologie auf Grundelemente der Waffelbacktechnologie zurückgreift, beginnt mit dem Schließen und Verriegeln der Backform unter Belassung des massegefüllten Formhohlraumes zwischen oberer Backplatte und unterer Backplatte. Dieser Abstand, der durch Verriegelung der oberen und unteren Backplatte während des Backvorganges konstant gehalten wird, bestimmt die Wandstärke des fertigen Formkörpers.

Der Backprozeß, dessen zeitlicher Ablauf in einem Druck-Zeit-Diagramm nach Fig. 7 dargestellt ist, erfolgt bei einer Temperatur zwischen 105°C und 300°C, wobei vielfach mit einer Backtemperatur von ca. 180°C besonders günstige Ergebnisse hinsichtlich des Ausbackens des Formkörpers und der Formkörpergeometrie erreicht wurden. Die Backdauer ist abhängig von verschiedenen Parametern, insbesondere von der Viskosität der Masse (Wassergehalt), dem Stärkeanteil (die Zeitdauer muß die vollständige und durchgehende Verkleisterung der nativen Stärke, auch im Zusammenwirken mit der gegebenenfalls eingesetzten modifizierten oder vorverkleisterten Stärke ermöglichen), der Geometrie des Formkörpers und den konkreten Massebestandteilen. Im allgemeinen kann zwischen einer Backdauer von 0,5 bis 15 Minuten variiert werden, wobei kürzere Zykluszeiten im Bereich von 1 bis 3 Minuten im allgemeinen ausreichend sind und zu maßhaltigen Formkörpern mit hoher, glatter Oberflächenqualität, großer Elastizität und struktureller Festigkeit aufgrund des sich ausbildenden Faser- bzw. Faserbündel-Stärke-Verbundes, einer faserverstärkten Stärkematrix, führen.

In anderen Fällen, insbesondere bei höherem Wasseranteil, hat auch eine Backdauer zwischen 3 und 13 Minuten zu guten Ergebnissen geführt, wobei zur Erhöhung der Effizienz der Verfahrensführung eine möglichst kurze Backdauer vorteilhaft ist, ohne daß die gleichmäßige innere Gefügeausbildung der Faserbündel-Stärke-Matrix beeinträchtigt wird.

In Fig. 7 ist die Formschließkraft der Backform über der Zeit aufgetragen, wobei der Druckanstieg während des dargestellten Backvorganges auf die Druckerhöhung infolge des Ausdampfens und des Verdampfungsprozesses des Wassers in der Masse zu beobachten ist. Für die vollständige Formkörperausbildung ist wesentlich, daß eine minimale, am Schließbolzen der Backform erfaßte, den Innendruck der Form aus der Wasserverdampfung repräsentierende Kraft von ca. 150 kp überschritten und andererseits der maximale Innendruck, der durch die maximal am Schließbolzen auftretende Kraft, hier von ca. 256 kp repräsentiert wird, nicht wesentlich überschritten wird oder übermäßig ansteigt.

In Fig. 7 bezeichnet t₁ die Zeit vom Verschließen der Backform bis zum Erreichen der einem minimalen Verdampfungsdruck in der Backform repräsentierenden Wert der Formschließkraft fₘᵢₙ, t₂ die Zeit vom Verschließen der Backform bis zum Erreichen eines einen maximalen Verdampfungsdruck innerhalb der Backform repräsentierenden Wert der Formschließkraft fₘₐₓ, t₃ die Zeit vom Verschließen der Backform bis zur Beendigung der Wasserdampfabgabe, t₄ die Ausbackzeit bzw. Trocknung des gebackenen Formkörpers und t₅ die gesamte Backdauer vom Schließen der Backform bis zum Öffnen der Backform repräsentieren. Im vorliegenden Fall wurde mit einer Schließkraftdifferenz fₘₐₓ-fₘᵢₙ von ca. 100 kp eine gute Qualität und Ausformbarkeit des Formkörpers erreicht, wobei t₅ die bevorzugte Backdauer im Bereich von 1 bis 3 Minuten repräsentiert.

Die Differenz t₃-t₁ betrifft somit den Backvorgang und die Formgebung unter Dampfabgabe.

Bei dem Backvorgang verkleistert die native Stärke (gegebenenfalls auch unter Wasseraufnahme von einem vorverkleisterten Stärkeanteil) und erstarrt. In die gelockerten Faserbündelstrukturen des Altpapieres wird die Stärke eingelagert und erzeugt eine stabile Bindung der gelockerten Faserstruktur mit der sich durch Verkleisterung ausbildenden Stärke-Matrix.

Wird lediglich native Stärke verwendet, genügen derartige Formkörper bereits einer Vielzahl von Anwendungsfällen hinsichtlich Elastizität und Oberflächengüte. Während ein hoher Stärkeanteil zu einer besseren Oberfläche bei allerdings verringerter Elastizität führt, kann die Elastizität des Formkörpers durch eine Verringerung des Stärkeanteiles üblicherweise nur zu Lasten einer glatten Oberfläche verringert werden. Durch das erfindungsgemäße Verfahren ist es jedoch möglich, eine wesentliche Verbesserung der Elastizität bei gleichzeitiger Gewährleistung einer hohen Oberflächengüte dadurch zu erreichen, daß neben nativer Stärke modifizierte oder vorverkleisterte Stärke verwendet wird. Die besondere Wirksamkeit der Verwendung einer Mischung aus vorverkleisterter und nativer Stärke wird darauf zurückgeführt, daß, bedingt durch die hohe Saugfähigkeit des Altpapieres, im Backprozeß für die Verkleisterung der nativen Stärke nicht genügend freies Wasser bzw. Backdauer zur Verfügung steht. Die eingebrachte, native Stärke verkleistert daher bei herkömmlichen Produkten vielfach nicht vollständig und bewirkt eine breite Streuung hinsichtlich der Elastizität der so erhaltenen Formkörper.

Erfindungsgemäß können in ihren Eigenschaften wesentlich über herkömmliche Formkörper auf Stärkebasis hinausgehende Eigenschaften dadurch erreicht werden, daß ein Teil der Stärke mit Wasser vorverkleistert wird und der viskosen Masse die vorverkleisterte Stärke beigegeben wird, wobei die Anteile sich, wie bereits oben erläutert, in einer Versuchsreihe aus den Fig. 4 und 5 (Anteil Gesamtstärke) ergeben. Die Anteile von nativer Stärke, vorverkleisterter Stärke und Wasser beziehen sich jeweils auf die Trockenmasse des Altpapieres.

Im Rahmen des erfindungsgemäßen Verfahrens ist es neben der Verwendung von nativer und modifizierter bzw. vorverkleisterter Stärke hinsichtlich Oberflächengüte, Elastizität, Gefügestruktur und Festigkeit der fertigen Formkörper erforderlich, daß Fasermaterial unterschiedlicher Länge, insbesondere Faserbündel unterschiedlicher Länge oder auch Mischungen längerer Faserbündel mit kürzeren Einzelfasern, verwendet wird. Die Faserlänge wird für dünnwandige Formkörper vorzugsweise im Bereich zwischen 0,5 und 5 mm gewählt, wobei ein Überblick über die Faserfraktionen (Klassierung) in Fig. 6 gegeben ist.

In einer Modifikation des Verfahrens nach Fig. 1 ist es auch möglich, die Zerkleinerung des Altpapieres, gegebenenfalls unter Zugabe von nativer Stärke sowie Füllstoffen, nicht in trokkenem Zustand vorzunehmen, sondern bereits die mechanische Zerkleinerung in Anwesenheit von Wasser in einem entsprechenden Zerkleinerungsmischer vorzunehmen.

Hinsichtlich des Einsatzes eines Anteiles vorverkleisterter Stärke kann auch eine auf die Backtechnologie abgestimmte, modifizierte Stärke eingesetzt werden.

Für die weitreichende Verwendbarkeit des so backtechnisch hergestellten Formkörpers zum Ersetzen von nicht-biologisch abbaubaren Kunststoff-Verpackungen, z.B. zur Verpackung von feuchtigkeitenthaltenden Lebensmitteln oder als Einweg-Verpackungen zur ambulanten Aufnahme von Suppen, Salaten oder auch anderen festen, hygroskopischen Lebensmitteln ist es aber erfoderlich, daß der Formkörper auch hinreichend feuchtigkeitsbeständig ist, ohne grundsätzlich seine biologische Abbaubarkeit zu verlieren.

Hierzu ist vorzugsweise vorgesehen, den gebackenen Formkörper entweder in einem "In-line"-Prozeß, gegebenenfalls unter Entnehmen des Formkörpers aus der Backform aber Einsetzen desselben in einen anderen Abschnitt der Backvorrichtung, flüssigkeitsdicht zu beschichten, wobei dies auch außerhalb der Backvorrichtung und, in Abhängigkeit von dem konkreten Beschichtungsvorgang unter Ausnutzung der Prozeßwärme des Backvorganges am noch heißen oder auch bereits abgekühlten Formkörper erfolgen kann.

Vorzugsweise wird, jedenfalls für ein "In-line"-Beschichtungsverfahren unmittelbar benachbart zu der Backform und innerhalb der Backvorrichtung ein gemeinsamer Antrieb und eine abgestimmte Steuerung zwischen Backprozeß und anschließendem Beschichtungsvorgang, gegebenenfalls unter Einsatz einer Handhabungseinrichtung zum Entnehmen des gebackenen Formkörpers aus der Backform und zum Einsetzen in eine Beschichtungsvorrichtung vorgesehen.

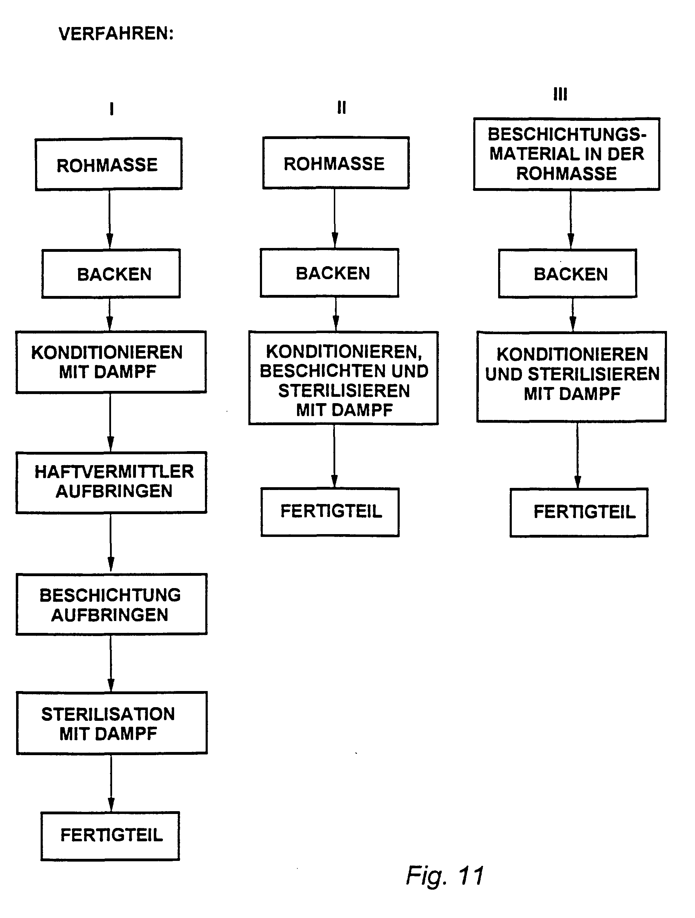

Bevorzugtes Verfahren zur Hydrophobierung des gebackenen Formkörpers durch Aufbringen einer flüssigkeitsdichten Beschichtung sind in Fig. 11 dargestellt. Danach wird bei dem Verfahren I im Anschluß an das Backen des Formkörpers dieser mit Wasserdampf konditioniert (Erhöhen der Flexibilität durch Feuchteeintrag) wobei im Anschluß an den Konditionierschritt ein Haftvermittler aufgetragen wird, um die Anhaftung der anschließend aufgebrachten, biologisch abbaubaren, flüssigkeitsdichten Beschichtung zu verbessern. Abschließend erfolgt vorzugsweise ein Sterilisieren des gebackenen und flüssigkeitsdicht beschichteten Formkörpers mit Heißdampf.

In einem alternativen Verfahrensablauf (Verfahren II) kann in Verbindung mit dem Wasserdampf-Konditionieren zugleich auch ein Beschichten des gebackenen Formkörpers durch Aufsprühen eines biologisch, abbaubaren, flüssigkeitsdichten Materiales erfolgen. Anschließend erfolgt auch hier vorzugsweise eine Sterilisation des Formkörpers mit Heißdampf.

In einer nicht erfindungsgemäßen Ausführungsform (Verfahren III) kann die Ausbildung einer die biologische Abbaubarkeit des Gesamtproduktes nicht gefährdenden, flüssigkeitsdichten Randschicht bzw. durchgehende Gesamtimprägnierung des Formkörpers auch dadurch erfolgen, daß in die viskose Rohmasse als fein verteilbares Fluid, Pulver oder Granulat das flüssigkeitsdichte Einsatzmaterial eingebracht und dieses während des Backvorganges, gegebenenfalls unter Aufschmelzen und Einbettung in den sich ausbildenden Faser-Stärke-Verbund, im wesentlichen gleichmäßig in dem Formkörpermaterial verteilt wird und nach Abschluß des Backvorganges zu einem flüssigkeitsdichten, gleichwohl biologisch abbaubaren Formkörper führt.

Das Verfahren nach Fig. 1 kann hinsichtlich der sich dort an den Backvorgang anschließenden Aufbringung einer flüssigkeitsdichten Beschichtung daher auch so abgewandelt werden, daß das gegen Gaspermeation oder das Eindringen von Flüssigkeit eine Barriereschicht bildende Material in einem vorhergenden Verfahrensschritt bereits der Vorbereitung der Backmasse beigegeben wird, und unter Hydrophobierung der Backmasse zu einem integral flüssigkeitsdichten Formkörper führt.

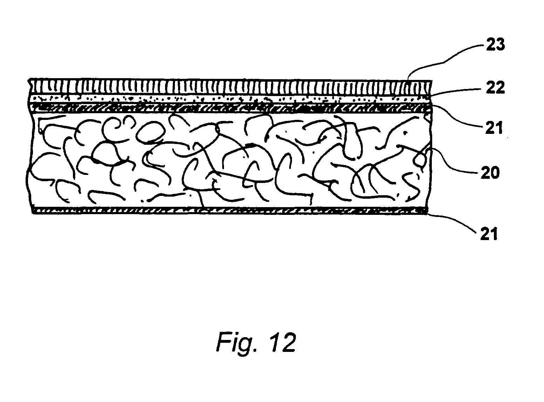

Fig. 12 zeigt schematisch einen Querschnitt durch einen Wandabschnitt des nach dem Verfahren gemäß Ausführungsbeispiel 1 hergestellten Formkörpers. Aufgrund der Dampfbildung und entstehenden Überdruckes innerhalb der Formkörpermasse während des Backvorganges entsteht eine aufgelockerte, beiderseits durch eine Hautschicht 21 begrenzte Grundmaterialschicht 20, in der sich in Verbindung mit einem Gemisch aus lang- und kurzfasrigen, biologisch abbaubaren Fasern oder Faserbündeln ein Stärke-Fasermaterial-Gerüst ausbildet. An die obere Hautschicht 21 schließt sich eine Haftvermittlerschicht 22 an, die die flüssigkeitsdichte Beschichtung 23 trägt. In diesem Fall ist der Formkörper, nur einseitig (z.B. an einer höher beanspruchten Innenoberfläche) mit der flüssigkeitsdichten Beschichtung 23 versehen. Selbstverständlich kann die flüssigkeitsdichte Beschichtung 23, gegebenenfalls in unterschiedlicher Qualität hinsichtlich ihrer Barriereeigenschaften auch auf beiden Hautschichten 21, also vorzugsweise innen und außen auf dem Formkörper ausgebildet werden. Die Barriereschicht bzw. flüssigkeitsdichte Beschichtung 23 kann auch beiderseits der Grundmaterialschicht 20 unterschiedliche Eigenschaften oder Dicke haben, bzw. aus unterschiedlichem, flüssigkeitsdichten Material bestehen.

Vorzugsweise kann die flüssigkeitsdichte Beschichtung durch Tauchen des Formkörpers in das Beschichtungsmaterial oder Aufsprühen einer hydrophoben Lösung oder unter Wärmebehandlung, insbesondere durch Aufschmelzen eines hydrophoben Granulates oder Pulvers erfolgen. Hierzu können insbesondere Cellulosederivate, vorzugsweise Celluloseacetat und/oder Stärkeacetat verwendet werden. Neben dem Auftrag einer flüssigen Beschichtung oder dem Aufschmelzen eines Pulvers oder Granulates kann die Beschichtung auch durch Aufbringen einer flüssigkeitsdichten Folie auf den gebackenen Formkörper, insbesondere einer Folie die Stärke- oder Celluloseacetat enthält, erfolgen, wobei das Anhaften der Folie unter Vakuum, mittels Druckluft oder durch mechanisches Aufpressen erfolgen kann und wobei Randüberstände der Folie zusammen mit einem Säubern des gebackenen Formkörpers von Materialresten aus den Abdampfkanälen beseitigt werden.

Gegebenfalls kann auch zur Ausbildung einer nur an der Innenseite des Formkörpers sich befindenden, flüssigkeitsdichten Randschicht eine Schmelze aus flüssigkeitsdichtem Material auf einen in der Backform befindlichen Formling aufgebracht und der Formkörper unter Ausbildung der Randschicht gebacken werden. Als hydrophobes Material kommen insbesondere Stärke- und/oder Celluloseacetat in Betracht, die auch bereits der viskosen Masse beigegeben werden können. Andererseits können auch biologisch abbaubare Kunststoffe wie biologische abbaubare Polyester und Polyesterderivate, insbesondere Polycaprolacton oder Polyalkylencarbonat verwendet werden.

Die Dicke der flüssigkeitsdichten, biologisch abbaubaren Randschicht liegt vorzugsweise im Bereich von 5 µm bis 100 µm, bei der Verwendung von Folien z.B. im Bereich von 60 µm bis 100 µm.

In Abhängigkeit von der gewünschten Barrierewirkung und Beständigkeit kann die flüssigkeitsdichte Beschichtung auch als Mehrfachbeschichtung aufgebracht werden, wobei die entweder integral durch die Hydrophobierung der Backmasse ausgebildete, flüssigkeitsdichte Randschicht oder die als nach dem Backvorgang aufgebrachte Beschichtung ausgebildete flüssigkeitsdichte Randschicht eine Barrierewirkung gegenüber Flüssigkeiten, insbesondere gegenüber Wasser, Milchsäure oder Fetten aufweist. Gegebenenfalls kann die Beschichtung auch gasdicht, insbesondere permeationsfest gegenüber Wasserdampf oder Sauerstoff ausgebildet werden, hierzu kann die Beschichtung z.B. Polyvinylalkohol enthalten.

Bei der flüssigkeitsdichten Beschichtung des gebackenen Formkörpers ein- oder beidseitig mit Folie, kann diese von Rollen oder Bögen entnommen werden und vorzugsweise aus Cellulosederivaten wie Celluloseacetat oder aus Zellglas bestehen oder sie kann aus synthetisch oder biologisch hergestelltem und biologisch abbaubaren Polyester- Kunststoff oder Polyesterderivaten wie Polycarprolacton oder Polyalkylencarbonat bestehen. Folie kann, gegebenenfalls unter Einsatz eines Haftvermittlers auf den noch vom Backvorgang heißen Formkörper, gegebenenfalls unter einer Anschmelzverbindung aufgebracht oder auch auf den abgekühlten Formkörper unter Vakuum, mit Hilfe von Druckluft oder mechanisches Aufpressen aufkaschiert werden.

In anderen Ausführungsbeispielen kann das flüssigkeitsdichte Material als Pulver oder Granulat oder in Form von Pellets vorliegen und der Formkörper unter Bepulvern, Aufsprühen oder Tauchen mit einer flüssigkeitsdichten Beschichtung versehen werden, oder es kann unmittelbar eine Hydrophobierung durch Einbringen dieser Materialien in die Backmasse vor dem Backvorgang alternativ zu dem in Fig. 1 dargestellten, anschließenden Beschichten des Formkörpers zur Ausbildung einer flüssigkeitsdichten Randschicht erfolgen. Vorzugsweise wird das Material aufgeschmolzen und ist hierzu der Formkörper noch vom vorhergehenden Backvorgang heiß.

Es ist ferner vorteilhaft, die Oberflächendichte des beschichteten Formkörpers unter Verringerung der Porigkeit zur Erzielung einer glatten Oberfläche zu erhöhen, z.B. durch einen nachgeordneten (Fein-)Preßvorgang, um so die Barrierewirkung der Beschichtung z.B. gegen Heißwasser, heiße Fette oder dergleichen weiter zu erhöhen. Bei Verwendung eines Haftvermittlers zwischen der Oberfläche des Formkörpers und der flüssigkeitsdichten Beschichtung kann dieser vorzugsweise aus Nitrocellulose oder Polyvinylalkohol bestehen, im letzteren Falle zugleich mit gassperrender Wirkung. Beim Aufsprühen eines pulverförmigen Beschichtungsmateriales, wie z.B. Polyvinylacetat, Polycaprolacton, Polyvinylalkohol, Nitrocellulose, synthetisch oder biologisch hergestellter und biologisch abbaubarer Polyester und Polyesterderivate, Alginat in Verbindung mit Calciumchlorid, Polyalkylencarbonat oder Celluloseacetat kann dies in vorteilhafter Weise mit Heißdampf erfolgen, wobei dies zugleich eine Wasserdampf-Kondition-ierung des gebackenen Formkörpers im Anschluß an den Backvorgang ergibt.

Bei konkaven Verpackungs-Formkörpern, z.B. in Schüsselform, ist die flüssigkeitsdichte Beschichtung bzw. Ausbildung als Randschicht zumindest innen vorgesehen, gegebenenfalls aber auch außen, wobei die Innenoberfläche des Verpackungs-Formkörpers gegebenenfalls höheren Anforderungen an die Barrierewirkung ihrer Oberflächenschicht im Hinblick auf Temperatur- und Fettbeständigkeit unterworfen ist, als die Außenoberfläche, für die möglicherweise insbesondere eine Feuchte- und Klimabeständigkeit für einen hinreichenden Zeitraum ausreicht.

In einer anderen Ausführungsform der flüssigkeitsdichten Beschichtung im Anschluß an den Backvorgang wird bevorzugt, daß flüssigkeitsdichte Material als Emulsion oder als Lösung auf den gebackenen Formkörper aufzubringen, wobei die Schicht nach dem Auftragen aushärtet und, gegebenenfalls unter spezieller Nach-Wärmebehandlung getrocknet wird.

Dabei kann die Lösung als kaltes Medium auf den noch vom Backvorgang heißen Formkörper aufgesprüht oder auch auf den abgekühlten Formkörper, gegebenenfalls unter Einsatz eines Haftvermittlers, aufgetragen werden. Die Emulsion oder Lösung mit dem flüssigkeitsdichten Material kann aber auch ihrerseits erwärmt oder heiß sein, zum Aufsprühen auf den kalten oder heißen Formkörper oder Tauchen desselben in die Beschichtungsflüssigkeit.

Die Lösung enthält neben dem hydrophoben Stoff vorzugsweise ein leicht flüchtiges Lösungsmittel. So kann z.B. eine kalte Lösung, die Celluloseacetat und als Lösungsmittel Aceton oder Ethylacetat enthält, auf den vorzugsweise abgekühlten Formkörper aufgesprüht oder dieser in die Lösung eingtaucht werden.

Eine heiße oder kalte Alginat- in Verbindung mit einer Calciumchlorid-Lösung in Wasser kann vorzugsweise auf den heißen oder abgekühlten Formkörper aufgebracht werden. Andere, hydrophobierende Stoffe, sind biologisch abbaubare Kunststoffe wie Polyalkylencarbonat, das als kalte Lösung in Aceton oder Ethylacetat auf den kalten Formkörper aufgesprüht werden kann. Andererseits kann auch z.B. synthetisch oder biologisch hergestellter und biologisch abbaubarer Polyester und Polyesterderivate in einer Lösung mit Chloroform als heiße oder kalte Lösung auf den heißen oder kalten Formkörper aufgesprüht oder dieser in die Lösung eingetaucht werden bzw. als Lösungsmittel an Stelle von Chloroform Ethylacetat verwendet werden, wobei die Lösung dann in erwärmtem bzw. heißem Zustand auf den heißen oder kalten gebackenen Formkörper aufgebracht wird.

Vorzugsweise kann als hydrophober Stoff auch Nitrocellulose in einer Lösung mit Ethylacetat verwendet werden, wobei die Lösung kalt auf den ebenfalls abgekühlten Formkörper aufgetragen wird.

Bei Verwendung von ebenfalls gassperrende Eigenschaften aufweisenden Polyvinylalkohl in Lösung entweder mit Ethylacetat, Wasser oder Aceton wird bevorzugt, die kalte Lösung auf den kalten Formkörper aufzubringen oder diesen einzutauchen.

Ferner kann eine Beschichtung auch mit Polycaprolacton in einer Lösung mit Chloroform (Lösung kalt/Formkörper kalt) oder Polyvinylacetat in Lösung mit Aceton oder Ethylacetat ebenfalls mit kalter Lösung auf den kalten bzw. abgekühlten Formkörper erfolgen.

In Abhängigkeit vom Einsatzzweck und von entsprechenden Anwendungsklassen wird die innere und/oder äußere flüssigkeitsdichte Beschichtung des Formkörpers vorgenommen bzw. während des Backvorganges durch vorherige Zumischung die Ausbildung einer hydrophoben Charakteristik des Formkörpers mit flüssigkeitsdichter Randschicht gewährleistet. Dabei reichen die Anwendungsklassen von der niedrigsten Anforderungsstufe A1 (Raumtemperatur 25-40°C, relative Luftfeuchtigkeit von 0-90%), Barrierewirkung der flüssigkeitsdichten Randschicht mehrere Tage über die Anwendungsklasse A2 kalt-wasserfest auch bei Raumtemperatur (25-40°C), für 24 Stunden bis zu einer Anwendungsklasse A3 die Kochwasserfestigkeit bei 95°C bis zu einer Stunde gewährleistet. Für die einzelnen Anwendungsklassen ist das Beschichtungsmaterial auch hinsichtlich Schichtdicke und angewendeter Konzentration unterschiedlich.

Die niedrigste Anwendungsklasse A1 kommt insbesondere für eine Außenbeschichtung des Formkörpers dann in Betracht, wenn dieser zugleich durch einen Deckel verschließbar ist, oder zur Beschichtung innen und außen, wenn der Verpackungsformkörper offen bleibt. In Abhängigkeit vom Einsatzzweck wird für die Innenausstattung des Verpackungsformkörpers die Anwendungsklasse A2 (kaltwasserfest) oder A3 (kochwasserfest) vorgesehen, wobei die Außenbeschichtung entsprechend niedrigere oder auch gleiche Anwendungsklassen hinsichtlich der Beschichtungsqualität aufweisen kann.

Eine Feuchtigkeitsaufnahme des Formkörpers kann auch dadurch verringert werden, daß im Ergebnis des Backvorganges eine wesentlich dichtere Hautschicht (vgl. die schematische Darstellung in Fig. 12) durch entsprechenden Trennmitteleinsatz (vollständig hydrierte Fette oder Wachse) während des Backvorganges erreicht wird.

Vorzugsweise wird vor der Anwendung einer flüssigkeitsdichten Beschichtung auf den gebackenen Formkörper dieser einer Grundierung mit einem Füllmmaterial unterzogen, um die Porenstruktur des gebackenen Formkörpers zu verschließen, wobei als Füllematerialien z.B. Wachse, Polymere, Fettstoffe dienen können und diese Grundierung zugleich als Haftvermittler zur Haftverbindung der flüssigkeitsdichten Schicht dient, wobei die Haftvermittlerschicht ebenfalls durch z.B. Tauchen, Aufsprühen und/oder Erwärmen aufgebracht werden kann.

Für eine höhere Anwendungsklasse (z.B. A3) wird die flüssigkeitsdichte Beschichtung, z.B. bei Verwendung einer Lösung (z.B. Celluloseacetat), mit höherer Konzentration (z.B. 50%ig) durchgeführt und auch mehrfach (z.B. dreimal) aufgebracht. Für geringe Erfordernisse hinsichtlich der Barrierewirkung in der gleichen Anwendungsklasse (z.B. A3) genügen auch niedrigere Konzentrationen und kann zumeist ein Mehrfachauftrag entfallen.

Die Ausbildung der flüssigkeitdichten Randschicht durch Hydrophobierung der Backmasse oder Auftragen einer Flüssigkeitsdichten Beschichtung muß zugleich die Siegelfähigkeit (Deckelversiegeln) gestatten und soll in unkomplizierter Weise auch die Farbgebung bzw. das Bedrucken des Formkörpers berücksichtigen.

Vorzugsweise ist an der Außenseite des Formkörpers ein Indikator für Feuchte und/oder Zeit vorgesehen, um die während der Produkt-Lebensdauer gegebene Barrierewirkung anzuzeigen.

Im Hinblick auf die biologische Abbaubarkeit des Formkörpers, die auch durch die flüssigkeitsdichte Randschicht nicht beeinträchtigt wird, kann es vorteilhaft sein, nach Gebrauch den Verpackungskörper zu zerkleinern, um hierdurch die biologische Abbaubarkeit des Formkörpers weiter zu beschleunigen.

Gegebenenfalls können die Formkörper zum Versand mit einer Schrumpffolie als zusätzlichen Schutz aus einem der vorgenannten biologisch abbaubaren Materialien umhüllt werden.

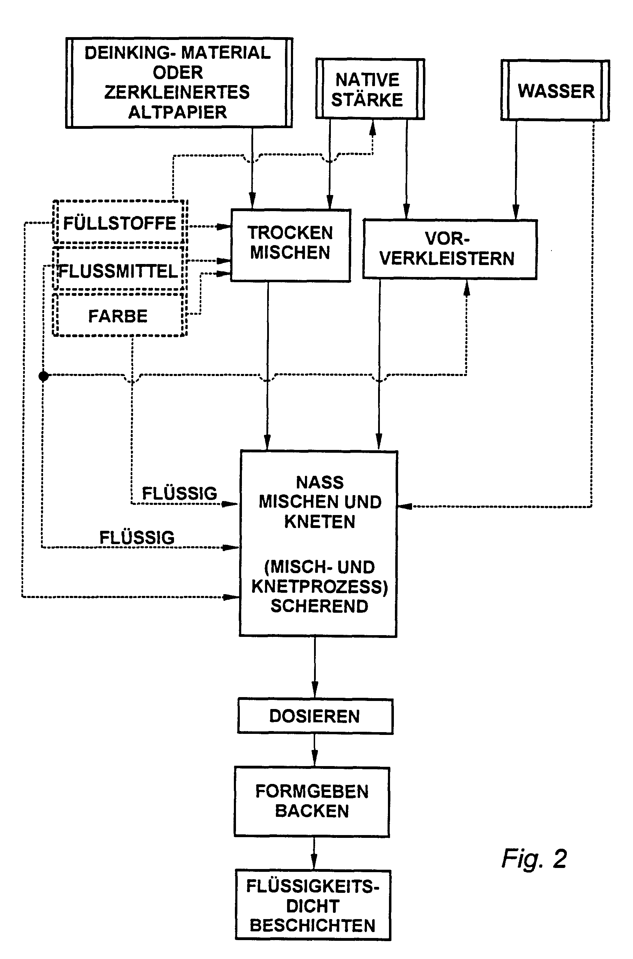

Ein weiteres Ausführungsbeispiel des erfindungsgemäßen Verfahrens wird nachstehend anhand von Fig. 2 erläutert.

Als Ausgangsmaterial (biologisch abbaubare Fasern enthaltendes, faserhaltiges Rohmaterial, insbesondere Zellulosefasern enthaltendes Material pflanzlichen Ursprungs) wird hier Deinking-Material, d.h. entfärbtes Altpapier, das sich bereits in einem pulver- bis kleinschnitzelförmigen Zustand befindet, verwendet, obwohl auch dieses Verfahren (unter Einschaltung eines Zerkleinerungsschrittes) mit Altpapier als Rohmaterial, wie im Verfahren nach Fig. 1, oder mit anderem biologisch abbaubare Fasern enthaltenen Fasermaterial durchgeführt werden kann.

Bei diesem Verfahren wird der bereits hinreichend zerkleinerte Deinking-Stoff trocken oder feucht mit einem Teil nativer Stärke, gegebenenfalls wie in dem Verfahren nach Fig. 1 unter Zugabe von Füllstoffen (die auch als Premix mit der nativen Stärke zugegeben werden können), sowie gegebenenfalls unter Zugabe von Flußmittel der vorerwähnten Art und/oder Farbstoffen vorgemischt, während ein anderer Anteil nativer Stärke mit Wasser vorverkleistert wird. Die trockene Vormischung erlaubt eine hohe Egalisierung und Homogenisierung der Masse und wird gefolgt von dem weiteren Verfahrensschritt des Misch- und Knetprozesses unter Anwesenheit von Wasser zur Aufschließung des Deinking-Materiales auf seine Faserstruktur, d.h. vorzugsweise auf aufgelockerte Faserbündel zur Ausbildung einer egalisierten viskosen Masse, der zusätzlich der Anteil vorverkleisterter Stärke unter Berücksichtigung der in Verbindung mit dem Verfahren nach Fig. 1 und den Fig. 4 und 5 angegebenen Mischungsverhältnisse von Wasser, Fasermaterial, nativer und vorverkleisterter Stärke, beigegeben ist. Wie in Verbindung mit dem Ausführungsbeispiel bereits dargelegt, kann insbesondere durch Beigabe in die trockene Vormischung auch bereits eine Hydrophobierung des Materiales und Ausbildung der flüssigkeitsdichten Randschicht während des Backprozesses erfolgen.

Gegebenenfalls können Flußmittel auch dem in Anwesenheit von Wasser ablaufenden Misch- und Knetprozeß beigegeben werden, wie dies auch für die Füllstoffzugabe oder die Zugabe von Farbstoffsuspensionen gilt. Auch in diesem Fall wird eine möglichst schonende und nicht-schneidende Zerlegung des Deinking-Materiales auf seine Faserstruktur, insbesondere unter Bildung verhältnismäßig großer, aufgelockerter Faserbündel bewirkt, wobei noch verbesserte Formkörpereigenschaften durch die gezielte Verwendung klassierten Materiales, d.h. von Faserbündelgemischen unterschiedlicher Faserlänge erreicht werden kann.

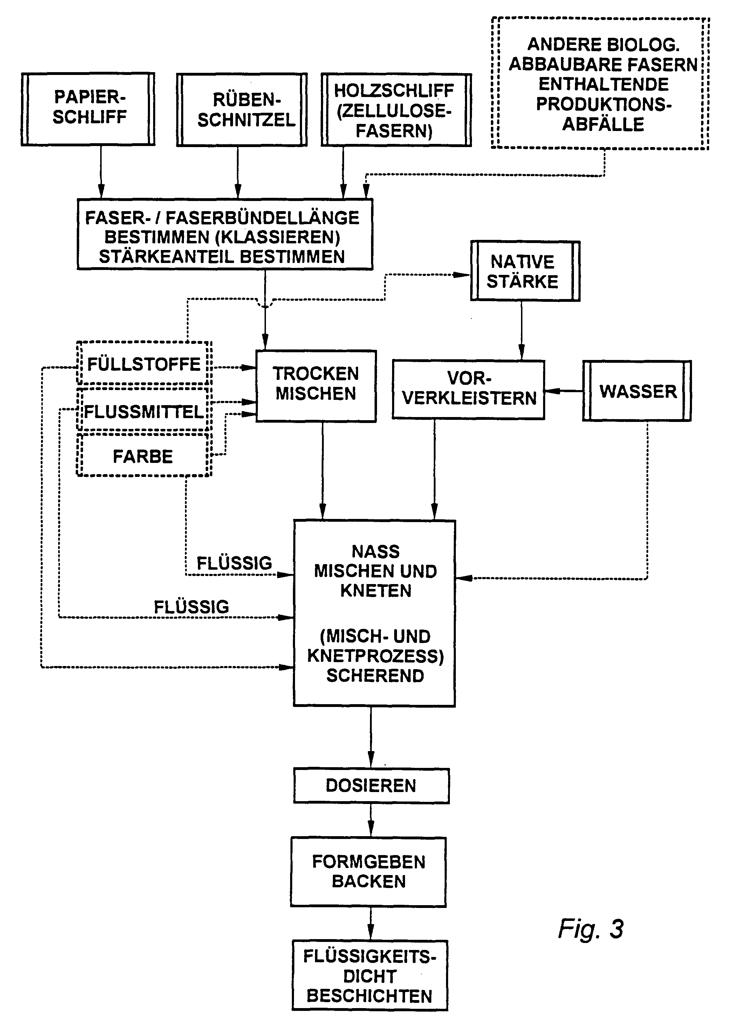

Die Trockenmischung der Bestandteile Altpapier und/oder Deinking-Material (oder auch andere zellulose- und stärkehaltige Produktionsrückstände als faserhaltiges Rohmaterial, siehe Verfahren nach Fig. 3) mit Stärke führt zu einer Verbesserung der Oberflächenqualität des Formkörpers.

Die übrigen Verfahrensschritte Dosieren sowie Backprozeß (gegebenenfalls unter vorheriger Formgebung) entsprechen den bereits anhand von Fig. 1 erläuterten, abschließenden Verfahrensschritten zur backtechnischen Herstellung der Formkörper, insbesondere für Verpackungszwecke sowie der sich anschließenden, zumindest teilweise flüssigkeitsdichten Beschichtung des Formkörpers in der bereits erläuterten Weise

Wie bereits in Verbindung mit dem Verfahren nach Fig. 1 erläutert, wird durch die Verwendung eines Gemisches aus vorverkleisterter Stärke und nativer Stärke, insbesondere durch den vorverkleisterten Anteil, die Elastizität des ausgebackenen Formkörpers maßgeblich bestimmt. Hinsichtlich der Mengenverhältnisse, die sich als vorteilhaft gezeigt haben, wird auf die Fig. 4 und 5 verwiesen.

Durch den anhand von Fig. 7 erläuterten Dampfdruck, der während des Backprozesses in der Backform herrscht (repräsentiert durch die Formschließkraft der Backform), wird die Oberfläche des Formkörpers ebenfalls mitbestimmt. Dieser Dampfdruck ist abhängig von dem Anteil nativer Stärke und der Feuchte der viskosen Masse.

Der Dampfdruck in der Backform kann durch Steuerung der Dampfabfuhrkanäle in der Backform hinsichtlich Querschnitt und Lage bis hin zur Verwendung von Steuerventilen in der gewünschten Weise gesteuert werden.

Gegebenenfalls kann auf zusätzliche Wasserzugabe in den Mischund Knetprozeß zur Herstellung der viskosen Masse (in Fig. 2 gestrichelt dargestellt) vollständig verzichtet werden, so daß die Feuchte der Masse und damit auch der Wasseranteil zur Verkleisterung der nativen Stärke durch den Wasseranteil der eingesetzten vorverkleisterten Stärke bestimmt wird. Auf diese Weise können auch die Dampfdruckverhältnisse während des Backprozesses und damit die Oberflächenqualität der Formkörper kontrolliert werden. Die native Stärke wird vorzugsweise im Mischprozeß mit den weiteren Bestandteilen der Trockenmasse zugegeben, kann aber auch zumindest teilweise direkt in den die Faserbündelzerlegung bewirkenden und die viskose Masse egalisierenden Misch- und Knetprozeß eingeführt werden (in Fig. 2 ebenfalls gestrichelt dargestellt). Diese weiteren Bestandteile sind im vorliegenden Fall trocken zerkleinertes Altpapier und/oder Deinking-Material, alternativ zusätzlich Flußmittel und/oder Füllstoffe.

Die Struktur und damit auch die Festigkeit der Formkörper wird durch das Verhältnis von Stärke zu Altpapier bzw. Deinking-Material wesentlichen bestimmt, ebenso wie durch die Länge der verwendeten Faserbündel bzw. Fasern, die sich wesentlich auf unterschiedliche Festigkeiten auswirkt, wie Untersuchungen von Vergleichsmustern zeigen, die in Fig. 8 und 9 dargestellt sind.

Insbesondere hat sich gezeigt, daß die Verwendung von faserhaltigem Material mit biologisch abbaubaren Fasern unterschiedlicher Faserlänge, d.h. Faserbündel bzw. Fasergemische mit unterschiedlichen Faserlängen im Bereich von 0,5 mm bis ca. 10 mm, insbesondere für dünnwandige Formkörper, vorzugsweise im Bereich von 1 mm bis 5 mm, sehr vorteilhafte Ergebnisse hinsichtlich der Festigkeit unter Berücksichtigung unterschiedlicher Formkörpergeometrien und Formtiefen der Backform ergibt.

Es hat sich gezeigt, daß durch ein Gemisch von kurzen und langen Fasern bzw. kurzen und langen Faserbündeln oder auch durch ein Gemisch langer Faserbündeln und kurzer Fasern in Verbindung mit dem Einsatz hinsichtlich des Backprozesses modifizierter oder vorverkleisterter Stärke und nativer Stärke die Festigkeit der Formkörper überraschend stark erhöht werden kann (s. Fig. 9).

Generell wurde ermittelt, daß bei einem hohen Anteil nativer Stärke im Verhältnis zu vorverkleisterter oder modifizierter Stärke eine gute Oberfläche, aber nur eine verhältnismäßig geringe Elastizität der Formkörper erreicht werden kann, während ein sehr hoher Anteil von vorverkleisterter oder modifizierter Stärke im Verhältnis zu nativer Stärke zu einer guten Elastizität, aber schlechterer Oberfläche des Formkörpers führt.

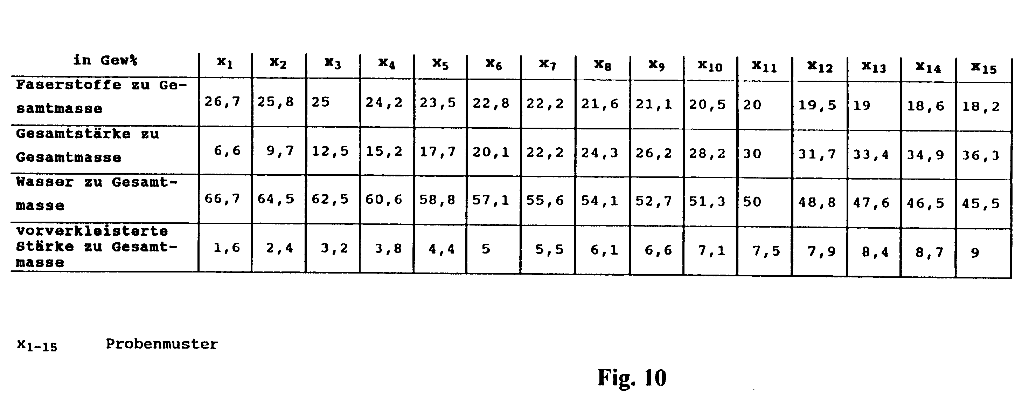

Hinsichtlich der jeweiligen Anwendung und Formkörpergeometrie ist daher das Verhältnis von nativer zu vorverkleisterter Stärke (vorzugsweise 3 : 1) unter Berücksichtigung der Faserlängen des faserhaltigen Materiales bzw. des Gemisches unterschiedlich langer Fasern oder Faserbündel anzupassen, wobei sich besonders vorteilhafte Verhältnisse auch im Hinblick auf einen verhältnismäßig kurzen Backprozeß von zwischen 0,5 und 3 Minuten bei ca. 150°C bis 200°C in Formkörpern gezeigt haben, deren Komposition in Fig. 10 dargestellt ist.

Ein weiteres Ausführungsbeispiel des erfindungsgemäßen Verfahrens ist in Fig. 3 dargestellt, wobei hier als Ausgangsmaterial Zellulosefasern Papierschliff, Rübenschnitzel und Holzschliff (Zellulosefasern) als beispielshafte Vertreter von Produktionsabfällen gewählt sind, wobei hierfür auch andere biologisch abbaubare Fasern enthaltende Produktionsabfälle, insbesondere auf Zellulosebasis, verwendbar sind.

Im Rahmen des erfindungsgemäßen Verfahrens können selbstverständlich auch jeweils direkt bereits aufgeschlossene, biologisch abbaubare Faserstrukturen, insbesondere Faserbündel, in einer Länge zwischen 0,5 mm und ca. 50 mm (höhere Werte für großflächige und/oder dickwandige Verpackungsformkörper), vorzugsweise zwischen 1 mm und 5 mm (insbesondere für dünnwandige, leichte Verpackungsformkörper) verwendet werden.

Fig. 3 verdeutlicht, daß das Verfahren auch unter Verwendung von Misch-Rohstoffen aus der Papier-, Lebens- oder Futtermittelindustrie bzw. verschiedenen Recyclingstoffen aus Altpapier durchgeführt werden kann, wobei in Fig. 3 diese Materialien bereits hinreichend zerkleinert, insbesondere unter Einsatz von Shreddern, Häckslern oder Schlagmühlen wie Stiftmühlen oder Hammermühlen, d.h. möglichst unter Zerreißen und nicht-schneidender Verarbeitung zur Schonung der Fasern (und zur Verminderung der Wasseraufnahme von Zellulosefasern) zerkleinert sind, wobei das zerkleinerte Rohmaterial in einem weiteren Verfahrensschritt zunächst hinsichtlich der vorliegenden Faserlänge und seines Stärkeanteiles zur Einstellung der jeweils weiteren Komponenten (Zugabe von nativer und vorverkleisterter Stärke bzw. Auswahl des Mischungverhältnisses von langen und kurzen Fasern bzw. Faserbündeln) klassiert wird.

Die übrigen Verfahrensschritte unter bevorzugter Trockenmischung von faserhaltigem Rohmaterial und nativer Stärke sowie gegegenenfalls Flußmittel und/oder Füllstoffen (soweit sie in trockenem Zustand vorliegen) sowie zur Ausbildung einer flüssigkeitsdichten Randschicht entsprechen denjenigen, wie sie bereits anhand der Verfahren nach den Fig. 1 und 2 erläutert wurden. Obwohl eine Trocken-Vormischung zwischen Zerkleinerung und Plastifizierung zur viskosen Masse bevorzugt wird, kann auch unmittelbar die Vereinigung der Einsatzmaterialien zur viskosen Masse in dem Misch- und Knetprozeß, gegebenenfalls in Anwesenheit von Wasser erfolgen.

Es hat sich jedoch gezeigt, daß besonders vorteilhafte Ergebnisse dann erzielt werden, wenn der Misch- und Knetprozeß ohne Wassserzugabe lediglich unter Feuchtezugabe aufgrund der unter Wasserüberschuß vorverkleisterten Stärke durchgeführt wird, wobei dies im Ergebnis zu einer hochviskosen, teigigen Masse führt. Während des Backprozesses steht zur Verkleisterung der nativen Stärke sowohl stärkeimmanentes Fruchtwasser als auch der aus der vorverkleisterten Stärke resultierende Wasserüberschuß zur Verfügung. Formkörper besonders vorteilhafter Qualität hinsichtlich Oberfläche, Struktur, Elastizität, Gefüge, Festigkeit und Stabiliät in bezug auf die Formtiefe der Backform bzw. Formkörpertiefe ergeben sich mit den in Fig. 10 dargestellten Parametern, wobei die Elastizität und die Gefügestruktur wesentlich durch den Einsatz vorverkleisterter Stärke mitbestimmt werden. Die Oberfläche und Gefügestruktur wird ferner wesentlich durch die Abdampfbedingungen während des Backprozesses, d.h. durch den Feuchteanteil der viskosen Masse bestimmt, der möglichst niedrig sein soll, wobei es in vielen Fällen für die Massevorbereitung ausreicht, die Anfeuchtung auf die indirekte Wasserzugabe in Gestalt der Beimengung unter Wasserüberschuß vorverkleisterter Stärke zu beschränken. Diese Feuchte reicht aus, um die vollständige Verkleisterung der nativen Stärke herbeizuführen.

Von wesentlichem Einfluß ist ferner die Länge der verwendeten, aufgelockerten Faserbündel, gegebenenfalls auch in Verbindung mit Einzelfasern, wobei der Fasereinsatz auch wesentlich das Fließverhalten der Masse in der Backform bestimmt und unter Berücksichtigung der Formkörpergeometrie, insbesondere der Formkörpertiefe gewählt werden muß, wobei sich die Verwendung von kurzen und langen Fasern im Gemisch (lange und kurze Faserbündel) in vielen Fällen der Verwendung klassierter Fasern von verhältnismäßig festgelegter Länge im Bereich zwischen 0,5 mm und 5 mm als überlegen gezeigt hat, wie ein Vergleich der Fig. 8 und 9 zeigt. Es können aber auch längere Fasern/Faserbündel bis ca. 10 mm Länge in Abhängigkeit von den Anforderungen an den Formkörper verwendet werden, wobei dies auch die Anforderungen an den vorgeschalteten Zerkleinerungsprozeß, z.B. des Altpapieres, herabsetzt. Obwohl dies in dem Verfahren nach Fig. 1 und 2 nicht dargestellt ist, kann bei Verwendung von Faser/ Faserbündel-Gemischen mit unterschiedlichen Längen zur Bewertung des Ausgangsmateriales selbstverständlich auch dort ein Klassieren des Fasermateriales nach Länge der Faser/Faserbündeln bzw. hinsichtlich eines Stärkegehaltes erfolgen.

Bei Verwendung z.B. feuchten Deinking-Materiales kann die Verfahrensstufe "trocken mischen" in den Verfahren nach Fig. 2 und 3 auch im feuchten Zustand gegebenenfalls auch unter geringfügiger Wasserzugabe erfolgen.

Es kann ferner vorteilhaft sein, am Beginn des Backvorganges noch viskose Masse in die bereits geschlossene Form nachzuschieben, um auch bei teigiger Masse das Formfüllverhalten zu verbessern sowie gegebenenfalls nicht mit starr verriegelten Formhälften, sondern mit einem geringfügigen Nachdrücken der oberen Backplatte gegen die untere Backplatte während des Backprozesses zu arbeiten. Im allgemeinen hat es sich jedoch als hinreichend erwiesen, die Backtechnologie mit starr verriegelten Backplatten (konstanter Abstand = Wanddicke des Formkörpers während des Backprozesses) beizubehalten.

Erforderlichenfalls kann sich an dem Backprozeß nach den in Fig. 1 bis 3 dargestellten Verfahren ein Konditionieren der erhaltenen, aus der Backform entnommenen Formkörper anschließen, insbesondere unter Auftrag (Aufsprühen) des flüssigkeitsdichten Materials als Lösung, Emulsion oder Suspension in einer Wasserdampf-Atmosphäre.

Ein Vergleich der Fig. 8 und 9 verdeutlicht nochmals die Vorteile der Verwendung von Fasergemischen unterschiedlicher Faserlängen gegenüber der Verwendung von Zellulosefasern bzw. Faserbündeln, die lediglich eine bestimmte bzw. in einem engen Bereich liegende Faserlänge repräsentieren.

Bevorzugte Rezepturen zur Ausführung des erfindungsgemäßen Verfahrens sind in Fig. 10 dargestellt. Hieraus ergibt sich, daß auch Formkörper mit sehr großer Formtiefe mit guter Festigkeit, Elastizität, Gefüge und Oberflächenstruktur nach dem erfindungsgemäßen Verfahren hergestellt werden konnten, wenn der Einsatz an Fasermaterial, insbesondere aufgelockerter Faserbündel, zur Gesamtmasse der viskosen Masse 15 bis 30 Gew.% betrug, der Anteil Gesamtstärke (nativer plus vorverkleisterter Stärke) zur Gesamtmasse der viskosen Masse ca. 40 bis 5 Gew.% betrug, der Wasseranteil in der Gesamtmasse der viskosen Masse ca. 45 bis 70 Gew.% betrug und der Anteil vorverkleisterter Stärke an der Gesamtmasse der viskosen Masse ca. 10 bis 1% betrug.

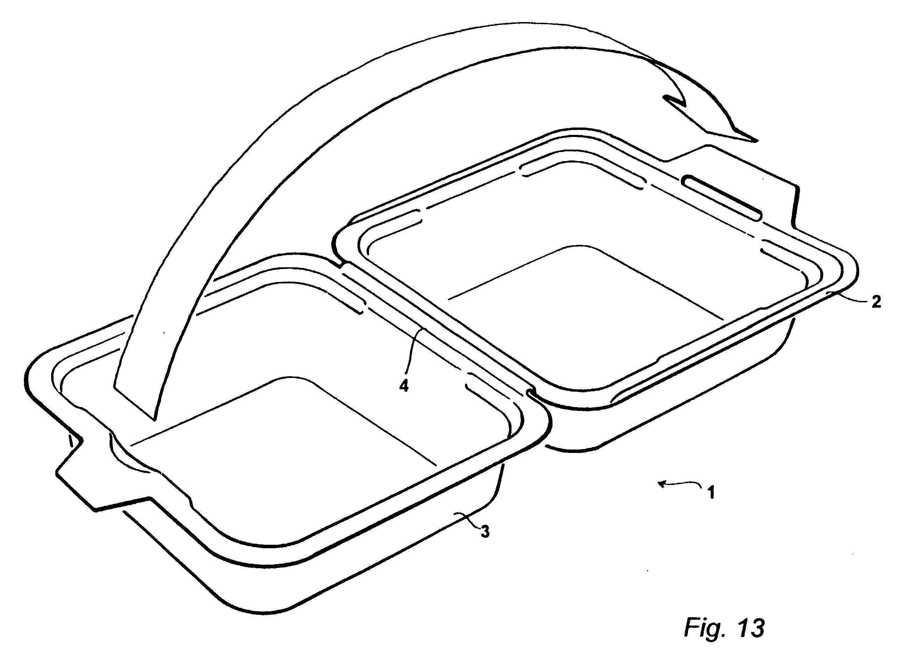

In den Fig. 13 bis 16 sind Ausführungsbeispiele von Formkörpern, die nach dem erfindungsgemäßen Verfahren hergestellt wurden, dargestellt. Fig. 11 zeigt einen Verpackungsformkörper 1 mit Boden- und Deckelteil 2, 3, die durch ein Scharnier 4 verbunden sind und z.B. zur verschließbaren Aufnahme von Lebensmitteln, auch im warmen Zustand, geeignet ist. Die flüssigkeitsdichte Randschicht ist hier nicht näher dargestellt. Der Verpackungsformkörper 1 weist zumindest eine innere flüssigkeitsdichte Randschicht, vorzugsweise Beschichtung der Anwendungsphase A2 auf.

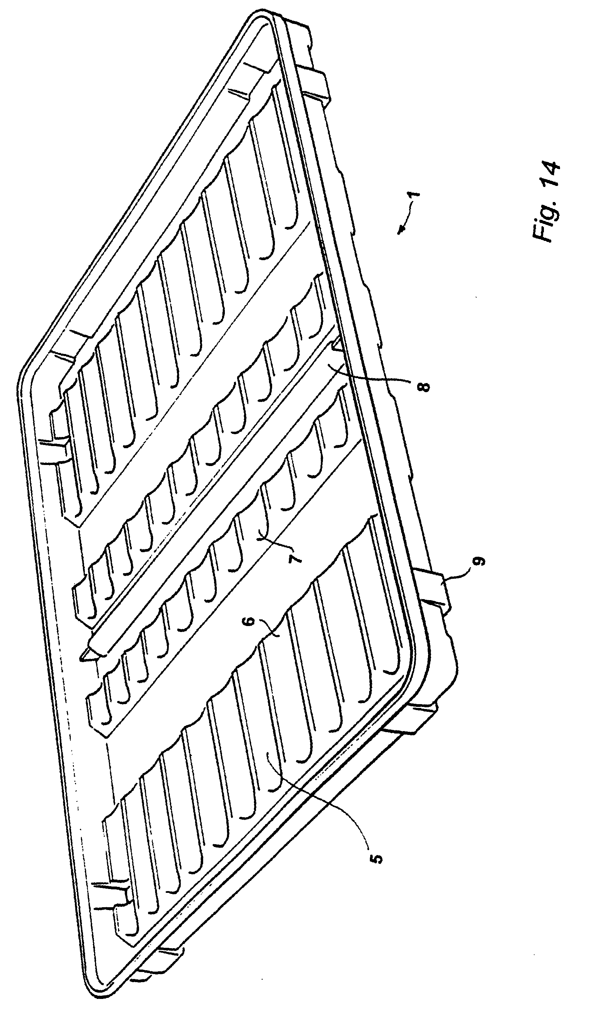

Fig. 14 zeigt einen Formkörper (Halbschale), der mit einem entsprechenden Gegenformkörper auch zu einer vollkommen geschlossenen Verpackung verbunden werden kann. Der schalenförmige Formkörper 1 weis eine Vielzahl von zylinderabschnittförmigen Vertiefungen 5 auf, wobei diese untereinander in einen längeren Abschnitt 6 und einen kürzeren Abschnitt 7 unterteilt sind und sich diese Anordnung symmetrisch, geteilt durch einen Mittelsteg 8 auf der anderen Seite des Formkörpers wiederholt. Seitliche "Füße" 9 erhöhen die Formstabilität und verbessern die Auflage und Stapelfähigkeit des Verpackungsformkörpers. Eine derartige Verpackungsschale kann z.B. zur Aufnahme von Kugelschreibern, Lippenstiften, Kosmetikartikeln, Bleistiften, Schreibgeräten, oder auch in der Pharmazie, z.B. zum Aufnehmen von Verpackungsröhrchen, verwendet werden. In diesem Fall wäre eine hinreichende Resistenz des Verpackungsformkörpers 1 gegen klimatische Umgebungseinflüsse (Feuchte) -Anwendungsklasse A1-im allgemeinen ausreichend.

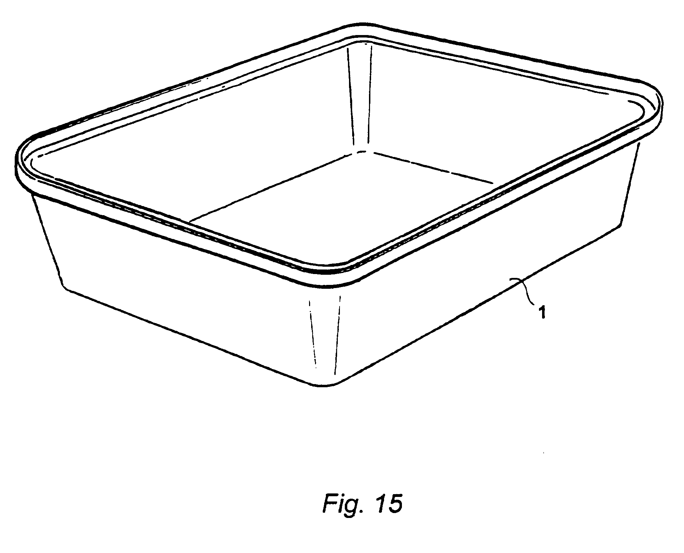

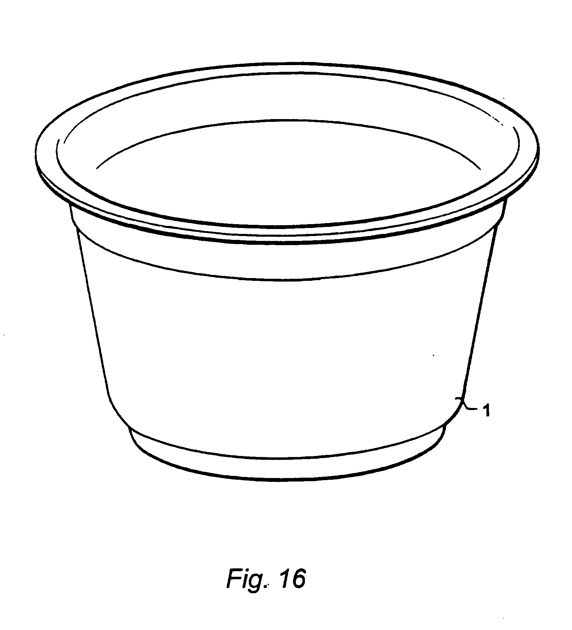

Die Fig. 15 und 16 zeigen verhältnismäßig tiefe Verpackungskörper 1, wie sie z.B. als Blumentopf, Saatgutschale oder für sonstige Verpackungs- oder Umhüllungszwecke verwendet werden können.

Alle Verpackungsformkörper 1, die nach dem vorerläuterten Verfahren hergestellt werden, könnten rasch, kostengünstig und mit hervorragenden Materialeigenschaften hinsichtlich Formstabilität, Bruchfestigkeit und Elastizität, Gefügedichte und Oberflächenbeschaffenheit hergestellt werden und sind, obgleich biologisch abbaubar, einer hydrophobierenden Behandlung wie anhand von Fig. 1, 2, 3, 11 und 12 erläutert, unterworfen.

Die Erfindung betrifft ein Verfahren zur Herstellung von Formkörpern, insbesondere Verpackungsformkörpern, aus biologisch abbaubarem Material unter Verwendung einer viskosen Masse, die biologisch abbaubares Fasermaterial in einem Gemisch von Fasern unterschiedlicher Länge, Wasser, sowie Stärke enthält und unter Ausbildung eines Fasermaterial-Stärke-Verbundes in einer Backform gebacken wird, sowie Formkörper nach diesem Verfahren. Nach dem Backen wird der Formkörper, vorzugsweise in der Backanlage, bevorzugt in einem In-line-Verfahren, flüssigkeitsdicht beschichtet und/oder weist durch Imprägnierung der viskosen Masse nach dem Backen eine hydrophobe Charakteristik auf.

## Patentansprüche

1. Verfahren zur Herstellung von folienbeschichteten Formkörpern, insbesondere von Verpackungsformkörpern, aus biologisch abbaubarem Material unter Verwendung einer viskosen Masse, die biologisch abbaubares Fasermaterial mit langfaserigen Fasern oder Faserbündeln mit einer Faser- oder Faserbündellänge in einem Bereich von 10 mm bis 50 mm im Gemisch mit kurzfaserigen Fasern oder Faserbündeln mit einer Faser- oder Faserbündellänge von 0,5 bis 20 mm, Wasser und Stärke enthält und unter Ausbildung eines Fasermaterial-Stärke-Verbundes in einer geschlossenen Backform gebacken wird, wobei das Verhältnis von Stärke zu Fasermaterial in der Masse im Bereich von 15 Gew.-% bis 200 Gew.-% liegt, das Backen für eine Zeitdauer zwischen 0,5 und 15 Minuten bei einer Backtemperatur zwischen 105°C und 300°C erfolgt und der folienbeschichtete Formkörper zumindest teilweise unter Ausbildung einer biologisch abbaubaren, flüssigkeitsdichten Randschicht hergestellt wird, wobei die Ausbildung der Randschicht durch Aufbringen einer flüssigkeitsabweisenden Folienbeschichtung auf den gebackenen Formkörper erfolgt.

2. Verfahren nach Anspruch 1, **dadurch gekennzeichnet, daß** die Beschichtung durch Tauchen oder Aufsprühen einer hydrophoben Lösung oder unter Wärmebehandlung, insbesondere durch Aufschmelzen eines hydrophoben Granulates oder Pulvers erfolgt.

3. Verfahren nach Anspruch 1 oder 2, **dadurch gekennzeichnet, daß** die Beschichtung Cellulosederivate enthält, insbesondere im wesentlichen aus Celluloseacetat besteht.

4. Verfahren nach zumindest einem der vorhergehenden Ansprüche 1-3, **dadurch gekennzeichnet, daß** die Beschichtung Stärkeacetat enthält.

5. Verfahren nach zumindest einem der vorhergehenden Ansprüche 1-4, **dadurch gekennzeichnet, daß** die Beschichtung durch Aufbringen einer Stärke- oder Zelluloseacetat enthaltenden Folie auf den gebackenen Formkörper erfolgt.

6. Verfahren nach zumindest einem der vorhergehenden Ansprüche 1-5, **dadurch gekennzeichnet, daß** die Ausbildung der Randschicht durch Aufbringen einer hydrophoben Beschichtung auf den noch vor vorangehenden Backvorgang heißen Formkörper unter gleichzeitigem Konditionieren, vorzugsweise durch Aufbringen der hydrophoben Beschichtung unter Heißdampf erfolgt.

7. Verfahren nach Anspruch 6, **dadurch gekennzeichnet, daß** der Beschichtungsvorgang innerhalb einer die Backform enthaltenden Backvorrichtung vorgenommen wird.

8. Verfahren nach zumindest einem der vorhergehenden Ansprüche 1-6, **dadurch gekennzeichnet, daß** der Formkörper mit zumindest einer Folie aus biologisch abbaubaren Kunststoff-Polymeren überzogen wird.

9. Verfahren nach zumindest einem der vorhergehenden Ansprüche 1-8, **dadurch gekennzeichnet, daß** eine Dicke der flüssigkeitsdichten, biologisch abbaubaren Randschicht 5 µm - 100 µm beträgt.

10. Verfahren nach zumindest einem der vorhergehenden Ansprüche 1-9, **dadurch gekennzeichnet, daß** der Formkörper innen und/oder außen mit einer Randschicht, gebildet durch eine flüssigkeitsdichte Beschichtung versehen wird.

11. Verfahren nach zumindest einem der vorhergehenden Ansprüche 1-10, **dadurch gekennzeichnet, daß** die Beschichtung als Mehrfachbeschichtung aufgebracht wird.

12. Verfahren nach zumindest einem der vorhergehenden Ansprüche 1-11, **dadurch gekennzeichnet, daß** die Randschicht als Barriereschicht eine Barrierewirkung gegenüber Flüssigkeiten, insbesondere Wasser, Milchsäure sowie Fetten aufweist.

13. Verfahren nach Anspruch 12, **dadurch gekennzeichnet, daß** die Randschicht eine im wesentlichen flüssigkeits- und gasdichte Barriereschicht, insbesondere Beschichtung bildet, vorzugsweise gegenüber Wasserdampf, Sauerstoff und Aroma.

14. Verfahren nach zumindest einem der vorhergehenden Ansprüche 1-13, **dadurch gekennzeichnet, daß** eine innere, flüssigkeitsdichte Oberfläche des Formkörpers eine höhere Feuchtigkeitsund/oder Temperaturbeständigkeit und/oder Fettbeständigkeit und/oder Gas-bzw. Aromadichtigkeit als eine äußere Oberfläche des Formkörpers aufweist.

15. Verfahren nach zumindest einem der vorhergehenden Ansprüche 1-14, **dadurch gekennzeichnet, daß** der Formkörper entlang einer Innenoberfläche mit einer flüssigkeitsdichten Beschichtung größerer Dicke als auf seiner Außenoberfläche versehen wird.

16. Verfahren nach zumindest einem der vorhergehenden Ansprüche 1-15, **dadurch gekennzeichnet, daß** der Formkörper in der Backform gebacken, anschließend aus der Backform entnommen und innerhalb der Backvorrichtung in eine weitere Vorrichtung zum Aufbringen der flüssigkeitsdichten Beschichtung eingesetzt wird.

17. Verfahren nach zumindest einem der vorhergehenden Ansprüche 1-16, **dadurch gekennzeichnet, daß** die Prozeßwärme der Backform, vorzugsweise innerhalb der Backvorrichtung, zur Erwärmung des Formkörpers und/oder eines auf diesen aufzubringenden hydrophoben Mediums für eine anschließende Beschichtung des Formkörpers, vorzugsweise innerhalb der Backvorrichtung, genutzt wird.

18. Verfahren nach zumindest einem der vorhergehenden Ansprüche 1-16, **dadurch gekennzeichnet, daß** der gebackene, vorzugsweise abgekühlte Formkörper zumindest teilweise durch Aufbringen einer kalten oder heißen Lösung flüssigkeitsdicht beschichtet wird.

19. Verfahren nach zumindest einem der vorhergehenden Ansprüche 1-16, **dadurch gekennzeichnet, daß** der durch den vorhergehenden Backvorgang noch heiße, gebackene Formkörper zumindest teilweise durch eine heiße Lösung flüssigkeitsdicht beschichtet wird.

20. Verfahren nach einem der Ansprüche 18 oder 19, **dadurch gekennzeichnet, daß** die Lösung einen hydrophoben Stoff sowie ein, insbesondere leicht flüchtiges, Lösungsmittel enthält.

21. Verfahren nach zumindest einem der vorhergehenden Ansprüche 18-20, **dadurch gekennzeichnet, daß** die vorzugsweise kalte Lösung als hydrophoben Stoff Celluloseacetat und als Lösungsmittel Aceton oder Ethylacetat enthält und auf den vorzugsweise abgekühlten Formkörper aufgebracht wird.

22. Verfahren nach zumindest einem der vorhergehenden Ansprüche 18-20, **dadurch gekennzeichnet, daß** die Lösung als hydrophoben Stoff Alginat und als Lösungsmittel Wasser enthält.

23. Verfahren nach Anspruch 22, **dadurch gekennzeichnet, daß** als Fixermittel Stoff Calciumverbindungen, vorzugsweise Calciumchlorid verwendet werden.

24. Verfahren nach zumindest einem der vorhergehenden Ansprüche 18-20, **dadurch gekennzeichnet, daß** vorzugsweise die kalte Lösung als hydrophoben Stoff Polyalkylencarbonat und als Lösungsmittel Aceton oder Ethylacetat enthält und auf den vorzugsweise abgekühlten Formkörper aufgebracht wird.

25. Verfahren nach zumindest einem der vorhergehenden Ansprüche 18-20, **dadurch gekennzeichnet, daß** die vorzugweise heiße Lösung als hydrophobe Stoffe synthetisch oder biologisch hergestellte und biologisch abbauber Polyester und Polyesterderivate und vorzugsweise die heiße Lösung als Lösungsmittel Chloroform, Aceton oder Ethylenacetat enthält.

26. Verfahren nach zumindest einem der vorhergehenden Ansprüche 18-20, **dadurch gekennzeichnet, daß** die vorzugsweise kalte Lösung als hydrophoben Stoff Nitrocellulose und als Lösungsmittel Ethylacetat oder Butylacetat enthält.

27. Verfahren nach zumindest einem der vorhergehenden Ansprüche 18-20, **dadurch gekennzeichnet, daß** die vorzugsweise kalte Lösung als hydrophoben Stoff Polyvinylalkohol und als Lösungsmittel Ethylacetat, Wasser oder Aceton enthält und auf den vorzugsweise abgekühlten Formkörper aufgebracht wird.

28. Verfahren nach zumindest einem der vorhergehenden Ansprüche 18-20, **dadurch gekennzeichnet, daß** die vorzugsweise kalte Lösung als hydrophoben Stoff Polycabrolacton und als Lösungsmittel Chloroform enthält und auf den vorzugsweise abgekühlten Formkörper aufgebracht wird.

29. Verfahren nach zumindest einem der vorhergehenden Ansprüche 18-20, **dadurch gekennzeichnet, daß** die vorzugsweise kalte Lösung als hydrophoben Stoff Polyvinylacetat und als Lösungsmittel Aceton oder Ethylacetat enthält und auf den vorzugsweise abgekühlten Formkörper aufgebracht wird.

30. Verfahren nach zumindest einem der vorhergehenden Ansprüche 1-17, **dadurch gekennzeichnet, daß** auf den, vorzugsweise heißen Formkörper Pulver, Granulate oder Pellets synthetisch oder biologisch hergestellter und biologisch abbaubarer Polyester und Polyesterderivate, insbesondere Polycaprolacton, Polyhydroxybutyrat, Polyhydroxybutyrat/Hydroxyvaleratcopolymere und/oder Polyaklylsuccinat aufgebracht und innig anhaftend mit dem Formkörper verbunden werden.

31. Verfahren nach Anspruch 30, **dadurch gekennzeichnet, daß** das Auftragen durch Bepulvern, Aufsprühen von Beschichtungsmaterial oder Tauchen des Formkörpers in das Beschichtungsmaterial erfolgt.

32. Verfahren nach Anspruch 30 oder 31, **dadurch gekennzeichnet, daß** das Aufbringen der Beschichtung durch Aufschmelzen erfolgt.

33. Verfahren nach zumindest einem der vorhergehenden Ansprüche 30-32, **dadurch gekennzeichnet, daß** die auf den Formkörper aufgebrachte Beschichtung nachfolgend zur Oberflächenverdichtung druckbeansprucht wird.

34. Verfahren nach zumindest einem der vorhergehenden Ansprüche 1-33, **dadurch gekennzeichnet, daß** die flüssigkeitsdichte Beschichtung unter Anwendung eines Haftvermittlers zwischen dem Formkörper und der Beschichtung auf den Formkörper aufgebracht wird, vorzugsweise unter Verwendung von Nitrocellulose oder Polyvinylacetat oder Polyvinylalkohol als Haftvermittler.

35. Verfahren nach zumindest einem der vorhergehenden Ansprüche 1-34, **dadurch gekennzeichnet, daß** im Anschluß an die Ausbildung der flüssigkeitsdichten Randschicht, insbesondere im Anschluß an die flüssigkeitsdichte Beschichtung des Formkörpers eine Konditionierung mit Dampf, insbesondere Heißdampf, erfolgt.

36. Verfahren nach zumindest einem der vorhergehenden Ansprüche 30-35, **dadurch gekennzeichnet, daß** auf den, insbesondere heißen, Formkörper ein Pulver zur Ausbildung einer flüssigkeitsdichten Beschichtung auf dem Formkörper unter Anwendung von Heißdampf zur Verbindung des Konditionierungs- und Beschichtungsvorganges aufgesprüht wird.

37. Verfahren nach zumindest einem der vorhergehenden Ansprüche 1-17, **dadurch gekennzeichnet, daß** der Formkörper zumindest teilweise mit biologischer abbaubarer Folie, im Anschluß an das Backen des Formkörpers beschichtet wird.

38. Verfahren nach Anspruch 37, **dadurch gekennzeichnet, daß** die Folie aus Celluloseacetat, Zellglas oder synthetisch oder biologisch hergestellte und biologisch abbaubare Polyester oder Polyesterderivate, insbesondere Polycaprolacton besteht.

39. Verfahren nach Anspruch 38, **dadurch gekennzeichnet, daß** die Folie, insbesondere unter Einsatz eines Haftvermittlers, unter Vakuum, durch Druckluft oder mechanisches Aufpressen mit dem gebackenen Formkörper verbunden wird.

40. Verfahren nach zumindest einem der vorhergehenden Ansprüche 37-39, **dadurch gekennzeichnet, daß** ein Beschneiden der Folie am beschichteten Formkörper nach Entnahme desselben in Verbindung mit einem Abtrennen von Materialüberständen, die aus Abdampfkanälen der Backform herrühren, erfolgt.

41. Verfahren nach zumindest einem der vorhergehenden Ansprüche 37-40, **dadurch gekennzeichnet, daß** im Anschluß an das Ausbilden der flüssigkeitsdichten Randschicht abschließend eine Sterilisierung des Formkörpers mit Heißdampf erfolgt.

42. Verfahren nach zumindest einem der vorhergehenden Ansprüche 1-41, **dadurch gekennzeichnet, daß** der Formkörper gebacken und anschließend dieser mit Wasserdampf konditioniert wird, nach dem Konditionieren ein Haftvermittler aufgetragen und im Anschluß daran die flüssigkeitsdichte Beschichtung aufgebracht und der beschichtete Formkörper abschließend einer Heißdampfsterilisation unterzogen wird.

43. Verfahren nach zumindest einem der vorhergehenden Ansprüche 1-41, **dadurch gekennzeichnet, daß** der Formkörper nach dem Bakken mit Wasserdampf konditioniert und anschließend direkt mit einer flüssigkeitsdichten Beschichtung versehen sowie hieran anschließend mit Heißdampf sterilisiert wird.

44. Verfahren nach zumindest einem der vorhergehenden Ansprüche 1-41, **dadurch gekennzeichnet, daß** das die Ausbildung einer flüssigkeitsdichten Randschicht bewirkende Material einer Backmasse zum Backen des Formkörpers unmittelbar beigegeben und in dieser eingemischt wird und nach Abschluß des Backvorganges der Formkörper konditioniert und mit Heißdampf sterilisiert wird.

45. Verfahren nach zumindest einem der Ansprüche 1-44, **dadurch gekennzeichnet, daß** zur Bildung des Fasermateriales faserhaltiges Rohmaterial verwendet wird, das insbesondere unter vorheriger Zerkleinerung zerfasert wird.

46. Verfahren nach zumindest einem der vorhergehenden Ansprüche 1-45, **dadurch gekennzeichnet, daß** das faserhaltige Rohmaterial Altpapier, Recyclingmaterial, insbesondere entfärbtes Altpapier, biologisch abbaubares Fasermaterial wie Zellulosefasern enthaltende Produktionsabfälle, insbesondere Holz- oder Papierschliff, Rübenschnitzel oder dgl. sind.

47. Verfahren nach zumindest einem der vorhergehenden Ansprüche 1-46, **dadurch gekennzeichnet, daß** das Fasermaterial direkt aus biologisch abbaubaren Fasern oder Faserbündeln besteht.

48. Verfahren nach Anspruch 47, **dadurch gekennzeichnet, daß** die Faser oder Faserbündel eine Länge im Bereich von 0,5 mm bis 5 mm aufweisen.

49. Verfahren nach zumindest einem der vorhergehenden Ansprüche 1-48, **dadurch gekennzeichnet, daß** als Stärke native und/oder vorverkleisterte Stärke verwendet wird.

50. Verfahren nach zumindest einem der vorhergehenden Ansprüche 1-49, **dadurch gekennzeichnet, daß** zur Bildung der viskosen Masse Wasser im Verhältnis von bis zu ca. 8 : 1, vorzugsweise 2,5 : 1, bezogen auf die Trockenmasse des faserhaltigen Rohmateriales, insbesondere Altpapieres, zugesetzt wird.

51. Verfahren nach Anspruch 49, **dadurch gekennzeichnet, daß** der Anteil vorverkleisterter oder modifizierter Stärke am gesamten Stärkeanteil innerhalb der viskosen Masse ca. 30 Gew.% beträgt.

52. Verfahren nach zumindest einem der vorhergehenden Ansprüche 1-51, **dadurch gekennzeichnet, daß** der Anteil von Stärke zu Wasser in der viskosen Masse ca. 1 : 10 bis 1 : 1, vorzugsweise 1 : 3 bis 1 : 2, beträgt und Wasser zur Bildung der viskosen Masse anschließend in Form von modifizierter oder unter Wasserüberschuß vorverkleisteter Stärke zugegeben wird.

53. Verfahren nach zumindest einem der vorhergehenden Ansprüche 1-52, **dadurch gekennzeichnet, daß** in der viskosen Masse der Anteil Fasermaterial 15 Gew.% bis 30 Gew.%, der Anteil Stärke 5 Gew.% bis 40 Gew.%, der Anteil Wasser 70 Gew.% bis 40 Gew.% beträgt.

54. Verfahren nach Anspruch 52, **dadurch gekennzeichnet, daß** in der viskosen Masse der Anteil vorverkleisteter oder modifizierter Stärke 1 Gew.% bis 10 Gew.% beträgt.

55. Verfahren nach zumindest einem der vorhergehenden Ansprüche 1-54, **dadurch gekennzeichnet, daß** das faserhaltige Rohmaterial, insbesondere Altpapier, zerkleinert und anschließend in Anwesenheit von Wasser und Zugabe von Stärke, vorzugsweise nativer Stärke, auf seine Faserstruktur zurückgeführt und die formbare, viskose Masse gebildet und diese anschließend gebacken wird.

56. Verfahren nach zumindest einem der vorhergehenden Ansprüche 1-55, **dadurch gekennzeichnet, daß** das faserhaltige Rohmaterial, insbesondere Altpapier, unter Anwesenheit von Wasser zerkleinert und anschließend unter Zugabe von Stärke, vorzugsweise nativer Stärke, auf seine Faserstruktur zurückgeführt und die formbare, viskose Masse gebildet und dieses anschließend gebakken wird.

57. Verfahren nach zumindest einem der vorhergehenden Ansprüche 1-56, **dadurch gekennzeichnet, daß** vor dem Backen der viskosen Masse diese dosiert wird.

58. Verfahren nach zumindest einem der vorhergehenden Ansprüche 1-57, **dadurch gekennzeichnet, daß** das faserhaltige Rohmaterial, oder das unmittelbar verwendete Fasermaterial hinsichtlich seiner Faserlänge sowie seines Stärkeanteiles untersucht und vor oder nach dem Zerkleinerungsvorgang klassiert wird.

59. Verfahren nach Anspruch 49, **dadurch gekennzeichnet, daß** die native Stärke teilweise bereits während einer Zerkleinerung des faserhaltigen Rohmateriales, insbesondere als Premix mit Füllstoffen, beigegeben wird.

60. Verfahren nach zumindest einem der vorhergehenden Ansprüche 1-59, **dadurch gekennzeichnet, daß** die Stärke dem faserhaltigen Rohmaterial, zumindest teilweise, während des Zerkleinerungsvorganges und/oder eines anschließenden Trocken- oder Naß-Mischvorganges und/oder während eines anschließenden, egalisierenden Misch- und Knetvorganges als native und/oder modifizierte, insbesondere vorverkleisterte Stärke, zugesetzt wird.

61. Verfahren nach zumindest einem der vorhergehenden Ansprüche 1-60, **dadurch gekennzeichnet, daß** die Stärke als vorverkleisterte Stärke und als native Stärke eingesetzt und der nativen Stärke vor Zugabe in den Zerkleinerungsprozeß des faserhaltigen Rohmateriales oder in den anschließenden, egalisierenden Mischund Knetprozeß zumindest ein Füllstoffmaterial beigegeben wird.

62. Verfahren nach Anspruch 60 oder 61, **dadurch gekennzeichnet, daß** die vorverkleisterte Stärke direkt in den Misch- und Knetprozeß zur Bildung der viskosen Masse gegeben wird.

63. Verfahren nach zumindest einem der vorhergehenden Ansprüche 1-62, **dadurch gekennzeichnet, daß** die Bildung der viskosen Masse unter Verwendung faserhaltigen Rohmateriales unterschiedlichen Zerkleinerungsgrades und unterschiedlicher Faserlänge erfolgt.

64. Verfahren nach zumindest einem der vorhergehenden Ansprüche 1-63, **dadurch gekennzeichnet, daß** vor Einfüllen der Masse in die Backform diese beheizt wird.

65. Verfahren nach zumindest einem der Ansprüche 1-64, **dadurch gekennzeichnet, daß** die zumindest zwei Backplatten der Backform am Beginn des Backvorganges miteinander unter Gewährleistung eines konstanten Abstandes der oberen und unteren Backplatte während des Backprozesses zueinander verriegelt werden, wobei der Abstand der einander zugewandten Innenoberflächen der Backplatten, zwischen denen sich die Masse befindet, eine Wandstärke des gebackenen Formkörpers bestimmt.

66. Verfahren nach zumindest einem der vorhergehenden Ansprüche 1-65, **dadurch gekennzeichnet, daß** während des Backvorganges eine kontrollierte Abfuhr von Wasserdampf aus der Backform erfolgt.

67. Verfahren nach Anspruch 66, **dadurch gekennzeichnet, daß** die Abführung von Wasserdampf aus dem Formhohlraum der Backform zeitlich und/oder örtlich gesteuert und/oder innendruckgesteuert erfolgt.

68. Verfahren nach zumindest einem der vorhergehenden Ansprüche 1-67, **dadurch gekennzeichnet, daß** nach Schließen und Verriegeln der Backplatten der Backform am Beginn des Backvorganges ein Nachdrücken von viskoser Masse in die Backform erfolgt.

69. Verfahren nach zumindest einem der vorhergehenden Ansprüche 1-64, 66-68, **dadurch gekennzeichnet, daß** der Backprozeß unter Abstandsverringerung zwischen oberer und unterer Backplatte der Backform erfolgt.

70. Verfahren nach zumindest einem der vorhergehenden Ansprüche 1-69, **dadurch gekennzeichnet, daß** für dickwandige und/oder großflächige Formkörper langfasrige Fasern oder Faserbündel bis zu 50 mm Länge verwendet werden.

71. Formkörper, insbesondere Verpackungsformkörper, aus biologisch abbaubarem Material, bestehend aus biologisch abbaubarem Fasermaterial, Stärke und einem Restanteil Wasser, hergestellt gemäß Verfahren nach zumindest einem der vorhergehenden Ansprüche 1-70, **dadurch gekennzeichnet, daß** der Formkörper ein Gemisch aus langfasrigen Fasern oder Fasernbündeln mit einer Faser- oder Faserbündellänge von 10 mm bis 50 mm und aus kurzfasrigen Fasern oder Fasernbündeln mit einer Faser- oder Faserbündellänge von 0,5 mm bis 20 mm sowie zumindest einseitig eine auf den gebackenen Formkörper aufgebrachte biologisch abbaubare, flüssigkeitsabweisende Folienbeschichtung als flüssigkeitsdichte Randschicht aufweist.

72. Formkörper nach Anspruch 71, **dadurch gekennzeichnet, daß** die Randschicht eine aufgebrachte Beschichtung mit einem hydrophoben Material, insbesondere Celluloseacetat, Alginat, Calciumchlorid, Polyalkylencarbonat, Biopolyester, Polycaprolacton, Polyvinylacetat, Nitrocellulose oder Polyvinylalkohol ist.

73. Formkörper nach Anspruch 72, **dadurch gekennzeichnet, daß** der Formkörper allseitig beschichtet ist.

74. Formkörper nach zumindest einem der Ansprüche 71-73, **dadurch gekennzeichnet, daß** der Formkörper eine poröse Innenstruktur, die durch eine periphere Hautschicht abgeschlossen ist, aufweist, und die Hautschicht vorzugsweise unter Zwischenlage einer Haftvertmittlerschicht, die flüssigkeitsdichte Beschichtung trägt.

75. Formkörper nach Anspruch 71, **dadurch gekennzeichnet, daß** der Formkörper innerhalb seines Fasermaterial- Stärke-Verbundes ein in diesem dispergiertes, flüssigkeitsdichtes Material enthält.

76. Formkörper nach Anspruch 71, **dadurch gekennzeichnet, daß** die Beschichtung eine Folie aus biologisch abbaubarem Kunststoff, insbesondere basierend auf Polyesterderivaten, ist.

77. Formkörper nach zumindest einem der vorhergehenden Ansprüche 71-77, **dadurch gekennzeichnet, daß** für dickwandige und/oder großflächige Formkörper bevorzugt langfasrige Fasern oder Faserbündel bis zu 50mm Länge verwendet werden, insbesondere Fasern oder Faserbündel mit einer Faser- oder Faserbündellänge im Bereich von 10 mmm bis 50 mm im Gemisch mit kurzfrasrigen Fasern oder Faserbündeln mit einer Faser- oder Faserbündellänge von 0,5 mm bis 20 mm.

78. Formkörper nach zumindest einem der vorhergehenden Ansprüche 71-77, **dadurch gekennzeichnet, daß** der Anteil Fasermaterial zu Stärke 4 : 1 bis 1 : 2 beträgt.

79. Formkörper nach zumindest einem der vorhergehenden Ansprüche 71-78, **dadurch gekennzeichnet, daß** der Formkörper einen Anteil vorverkleisteter Stärke enthält.

80. Formkörper nach zumindest einem der vorhergehenden Ansprüche 71-79, **dadurch gekennzeichnet, daß** der Formkörper ein Gemisch aus, insbesondere langfasrigen, aufgelockerten Faserbündeln und, insbesondere kurzfasrigen, Einzelfasern oder Faserbündeln enthält.

## Claims

1. Method to produce foil coated moulds, particularly packaging moulds from biologically degradable material using a viscose mass which contains biologically degradable fibrous material with long-fibrous fibres or fibre bundles with a fibre or fibre bundle length in a range of 10 mm to 50 mm in a mixture of short-fibrous fibres or fibre bundles with a fibre or fibre bundle length of 0.5 to 20 mm, contains water and starch and, forming a fibre material starch-compound, is baked in a closed baking mould, whereby the ratio of starch to fibre material in the mass lies in the range of 15 % by weight to 200 % by weight, baking time is between 0.5 and 15 minutes at a baking temperature of between 105°C and 300°C and the foil coated mould is produced at least partly forming a biologically degradable, liquid-proof skin, whereby the skin is formed by applying a liquid-repellent foil coating onto the baked mould.

2. Method according to claim 1, **characterised in that** the coating is applied by dipping or spraying a hydrophobic solution or by using heat treatment, particularly by fusing a hydrophobic granulate or powder onto the surface.

3. Method according to claims 1 or 2, **characterised in that** the coating contains cellulose derivatives, and particularly consists mainly of cellulose acetate.

4. Method according to at least one of the above claims 1 to 3, **characterised in that** the coating contains starch acetate.

5. Method according to at least one of the above claims 1 to 4, **characterised in that** the coating is obtained by applying a foil containing starch or cellulose acetate onto the baked mould.

6. Method according to at least one of the above claims 1 to 5, **characterised in that** the skin is formed by applying a hydrophobic coating onto the hot mould before the above baking process with simultaneous conditioning, preferably by applying the hydrophobic coating using superheated stoam.

7. Method according to claim 6, **characterised in that** the coating process takes place inside a baking device containing the baking mould.

8. Method according to at least one of the above claims 1 to 6, **characterised in that** the mould is coated with at least one foil made from biologically degradable plastic polymers.

9. Method according to at least one of the above claims 1-8, **characterised in that** a thickness of the liquid-proof, biologically degradable skin is 5 µm - 100 µm.

10. Method according to at least one of the above claims 1 to 9, **characterised in that** the mould is provided inside and/or outside with a skin, formed by a liquid-proof coating.

11. Method according to at least one of the above claims 1 to 10, **characterised in that** the coating applied is a composite coating.

12. Method according to at least one of the above claims 1 to 11, **characterised in that** the skin acts as a barrier film against liquids, particularly water, lactic acid as well as fats.

13. Method according to claim 12, **characterised in that** the skin forms an essentially liquid-proof and gas-tight barrier film, particularly coating, preferably against steam, oxygen and aroma.

14. Method according to at least one of the above claims 1 to 13, **characterised in that** an inner, liquid-proof surface of the mould has a higher humidity- and/or temperature-resistance and/or grease-resistance and/or gas- or aroma-tightness than an outer surface of the mould.

15. Method according to at least one of the above claims 1 to 14, **characterised in that** the mould along an inner surface is provided with a liquid-proof coating of greater thickness than on its outer surface.

16. Method according to at least one of the above claims 1 to 15, **characterised in that** the mould is baked in the baking mould, then taken from the baking mould and placed inside the baking device in a further device to apply the liquid-proof coating.

17. Method according to at least one of the above claims 1 to 16, **characterised in that** the process heat of the baking mould, preferably inside the baking device, is used to heat the mould and/or a hydrophobic medium to be applied to this for subsequent coating of the mould, preferably inside the baking device.

18. Method according to at least one of the above claims 1 to 16, **characterised in that** the baked, preferably cooled mould is at least partly coated to a liquid-proof state by applying a cold or hot solution.

19. Method according to at least one of the above claims 1 to 16, **characterised in that** the baked mould still hot through the previous baking process is at least partly coated to a liquid-proof state by a hot solution.

20. Method according to one of the claims 18 or 19, **characterised in that** the solution contains a hydrophobic substance as well as an especially volatile solvent.

21. Method according to at least one of the above claims 18 to 20, **characterised in that** the preferably cold solution contains cellulose acetate as the hydrophobic substance and acetone or ethyl acetate the solvent and is applied onto the preferably cooled mould.

22. Method according to at least one of the above claims 18 to 20, **characterised in that** the solution contains alginate as the hydrophobic substance and water as the solvent.

23. Method according to claim 22, **characterised in that** calcium compounds, preferably calcium chloride are used as the fixing agent.

24. Method according to at least one of the above claims 18 to 20, **characterised in that** preferably the cold solution contains polyalkylencarbonate as the hydrophobic substance and acetone or ethyl acetate as the solvent and is applied onto the preferably cooled mould.

25. Method according to at least one of the above claims 18 to 20, **characterised in that** the preferably hot solution contains synthetically or biologically produced and biologically degradable polyester and polyester derivatives as the hydrophobic substance and preferably the hot solution contains chloroform, acetone or ethylenacetate as the solvent.

26. Method according to at least one of the above claims 18 to 20, **characterised in that** the preferably cold solution contains nitrocellulose as hydrophobic substance and ethyl acetate or butyl acetate as the solvent.

27. Method according to at least one of the above claims 18 to 20, **characterised in that** the preferably cold solution contains polyvinyl alcohol as the hydrophobic substance and ethyl acetate, water or acetone as the solvent and is applied to the preferably cooled mould.

28. Method according to at least one of the above claims to 18 to 20, **characterised in that** the preferably cold solution contains polycabrolacton as the hydrophobic substance and chloroform as the solvent and is applied to the preferably cooled mould.

29. Method according to at least one of the above claims 18 to 20, **characterised in that** the preferably cold solution contains polyvinylacetate as the hydrophobic substance and acetone or ethyl acetale as the solvent and is applied to the preferably cooled mould.

30. Method according to at least one of the above claims 1 to 17, **characterised in that** powder, granulate or pellets of synthetically or biologically produced and biologically degradable polyester and polyester derivatives, particularly polycaprolacton, phenoxy butyrate, phenoxy butyrate/hydroxyvalerate copolymers and/or polyalkylsuccinate are applied onto the preferably hot mould and adhering homogeneously combined with the mould.

31. Method according to claim 30, **characterised in that** the coating is applied by powder coating, spraying of the coating material or dipping of the mould into the coating material.

32. Method according to claim 30 or 31, **characterised in that** the coating is fusing onto the surface.

33. Method according to at least one of the above claims 30 to 32, **characterised in that** the coating applied onto the mould is subsequently subjected to high pressure to compact the surface.

34. Method according to at least one of the above claims 1 to 33, **characterised in that** the liquid-proof coating is applied onto the mould using an adhesion promoter between the mould and the coating, preferably using nitrocellulose or polyvinyl acetate or polyvinyl alcohol as adhesion promoter.

35. Method according to at least one of the above claims 1 to 34, **characterised in that** after the liquid-proof skin has been formed, in particular after the liquid-proof coating of the mould, it is conditioned with steam, particularly superheated steam.

36. Method according to at least one of the above claims 30 to 35, **characterised in that** a powder to form a liquid-proof coating on the mould is sprayed onto the particularly hot mould, using superheated steam to combine the conditioning and coating processes.

37. Method according to at least one of the above claims 1 to 17, **characterised in that** the mould is coated at least partly with biologically degradable foil, afler the mould has been baked.

38. Method according to claim 37, **characterised in that** the foil consists of cellulose acetate, transparent film or synthetically or biologically produced and biologically degradable polyester or polyester derivatives, particularly polycaprolacton.

39. Method according to claim 38, **characterised in that** the foil, particularly using an adhesion promoter, is combined by vacuum, compressed air or mechanical pressure with the baked mould.

40. Method according to at least one of the above claims 37 to 39, **characterised in that** the foil is cut on the coated mould after removal of the same in conjunction with separating any material excess which stems from waste steam ducts on the baking mould.

41. Method according to at least one of the above claims 37 to 40, **characterised in that** after the liquid-proof skin has been formed the mould is then sterilised with superheated steam.

42. Method according to at least one of the above claims 1 to 41, **characterised in that** the mould is baked and subsequently conditioned with steam, after which an adhesion promoter is applied and then the liquid-proof coating is applied and finally the coated mould is sterilised with superheated steam.

43. Method according to at least one of the above claims 1 to 41, **characterised in that** the mould is conditioned after baking with steam and subsequently immediately provided with a liquid-proof coating and then also sterilised with superheated steam.

44. Method according to at least one of the above claims 1 to 41, **characterised in that** the material of a baking mass causing a liquid-proof skin to form is added directly to bake the mould, is mixed in this and after the mould baking process has finished is conditioned and sterilised with superheated steam.

45. Method according to at least one of the claims 1 to 44, **characterised in that** fibre-containing raw material which is pulped particularly having been crushed beforehand is used to form the fibre material.

46. Method according to at least one of the above claims 1 to 45, **characterised in that** the fibre-containing raw material is waste paper, recycled material, particularly de-inked waste paper, biologically degradable fibrous material such as production waste containing cellulose fibres, particularly sawdust or paper pulp, beet chip or similar.

47. Method according to at least one of the above claims 1 to 46, **characterised in that** the fibrous material consists directly of biologically degradable fibres or fibre bundles.

48. Method according to claim 47, **characterised in that** the fibres or fibre bundles have a length in the range of 0.5 mm to 5 mm.

49. Method according to at least one of the above claims 1 to 48, **characterised in that** the starch used is native and/or pre-mashed starch.

50. Method according to at least one of the above claims 1 to 49, **characterised in that** to form the viscose mass, water is added in the ratio of up to approx. 8:1, preferably 2.5:1, related to the dry mass of the fibre-containing raw material, particularly waste paper.

51. Method according to claim 49, **characterised in that** the amount of pre-mashed or modified starch of the total starch within the viscose mass is approx. 30 % by weight.

52. Method according to at least one of the above claims 1 to 51, **characterised in that** the ratio of starch to water in the viscose mass is approx. 1:10 to 1:1, preferably 1:3 to 1:2 and water to form the viscose mass is then added in the form of modified or starch pre-mashed with a surplus of water.

53. Method according to at least one of the above claims 1 to 52, **characterised in that** the amount of fibrous material in the viscose mass is 15 % by weight to 30 % by weight, the amount of starch is 5 % by weight to 40 % by weight, the amount of water is 70 % by weight to 40 % by weight.

54. Method according to claim 52, **characterised in that** the amount of pre-mashed or modified starch in the viscose mass is 1 % by weight to 10 % by weight.

55. Method according to at least one of the above claims 1 to 54, **characterised in that** the fibre-containing raw material, particularly waste paper, is crushed and subsequently in the presence of water and with the addition of starch, preferably native starch, is taken back to its fibre structure and the malleable, viscose mass is formed and subsequently baked.

56. Method according to at least one of the above claims 1 to 55, **characterised in that** the fibre-containing raw material, particularly waste paper, is crushed in the presence of water and subsequently with the addition of starch, preferably native starch, is taken back to its fibre structure and the malleable, viscose mass is formed and subsequently baked.

57. Method according to at least one of the above claims 1 to 56, **characterised in that** the viscose mass is dosed before the baking process.

58. Method according to at least one of the above claims 1 to 57, **characterised in that** the fibre-containing raw material, or the directly used fibrous material is examined in regard to its fibre length as well as its starch content and graded before or after the crushing process.

59. Method according to claim 49, **characterised in that** the native starch is partly added already during crushing of the fibre-containing raw material, particularly as premix with fillers.

60. Method according to at least one of the above claims 1 to 59, **characterised in that** the starch is added to the fibre-containing raw material, at least partly, during the crushing process and/or a subsequent dry or wet mixing process and/or during a subsequent, equalising mixing and kneading process as native and/or modified, particularly pre-mashed starch.

61. Method according to at least one of the above claims 1 to 60, **characterised in that** the starch used is pre-mashed starch and native starch and at least one filler is added to the native starch before being dosed into the crushing process of the fibre-containing raw material or in the subsequent equalising mixing and kneading process.

62. Method according to claim 60 or 61, **characterised in that** the pre-mashed starch is added directly in the mixing and kneading process to form the viscose mass.

63. Method according to at least one of the above claims 1 to 62, **characterised in that** the viscose mass is formed using fibre-containing raw materials of varying grade of crushing and fibre length.

64. Method according to at least one of the above claims 1 to 63, **characterised in that** the baking mould is heated before being filled with the mass.

65. Method according to at least one of the claims 1 to 64, **characterised in that** at least two baking plates of the baking mould at the start of the baking process are interlocked to ensure a constant distance between the upper and lower baking plates during the baking process, the distance of the inner surfaces of the baking plates facing each other, between which the mass is held, defining a wall thickness of the baked mould.

66. Method according to at least one of the above claims 1 to 65, **characterised in that** during the baking process steam is discharged in a controlled way from the baking mould,

67. Method according to claim 66, **characterised in that** the steam is discharged from the mould cavity of the baking mould in a timed and/or exactly positioned way and/or with inside-pressure control.

68. Method according to at least one of the above claims 1 to 67, **characterised in that** after the baking plates of the baking mould are closed and interlocked at the start of the baking process, the viscose mass is re-compressed into the baking mould.

69. Method according to at least one of the above claims 1 to 64, 66 to 68, **characterised in that** the distance between the upper and lower baking plates of the baking mould reduces during the baking process.

70. Method according to at least one of the above claims 1 to 69, **characterised in that** long fibrous fibres or fibre bundles up to 50 mm in length are used for thick walled and/or large surface moulds.

71. Mould, particularly packaging mould made from biologically degradable material, consisting of biologically degradable fibrous material, starch and a residual amount of water, in accordance with methods according to at least one of the above claims 1 to 70, **characterised in that** the mould has a mixture of long-fibrous fibres or fibre bundles with a fibre- or fibre bundle length of 10 mm to 50 mm and of short-fibrous fibres or fibre bundles with a fibre- or fibre bundle length of 0.5 mm to 20 mm as well as a biologically degradable, liquid-repellent foil coating as liquid-proof skin applied at least on one side of the baked mould.

72. Mould according to claim 71, **characterised in that** the skin is a coating with a hydrophobic material, particularly cellulose acetate, alginate, calcium chloride, polyalkylene carbonate, biopolyester, polycaprolacton, polyvinyl acetate, nitrocellulose or polyvinyl alcohol.

73. Mould according to claim 72, **characterised in that** the mould is coated on all sides.

74. Mould according to at least one of the claims 71 to 73, **characterised in that** the mould has a porous inner structure, which is closed by a peripheral skin film and the skin film, preferably with an intermediate film of adhesion promoter supports the liquid-proof coating.

75. Mould according to claim 71, **characterised in that** the mould contains inside its fibrous material-starch-compound a liquid-proof material dispersed in this.

76. Mould according to claim 71, **characterised in that** the coating is a foil made from biologically degradable plastic, particularly based on polyester derivatives.

77. Mould according to at least one of the above claims 7 1 to 77, **characterised in that** for thick-walled and/or large surface moulds preferably long-fibrous fibres or fibre bundles up to 50 mm in length are used, particularly fibres or fibre bundles with a fibre- or fibre bundle length in the range of 10 mm to 50 mm mixed with short-fibrous fibres or fibre bundles with a fibre or fibre bundle length of 0.5 mm to 20 mm.

78. Mould according to at least one of the above claims 71 to 77, **characterised in that** the ratio of fibrous material to starch is 4:1 to 1:2.

79. Mould according to at least one of the above claims 71 to 78, **characterised in that** the mould contains an amount of pre-mashed starch.

80. Mould according to at least one of the above claims 71 to 79, **characterised in that** the mould contains a mixture of particularly long-fibrous, open fibre bundles and, particularly short-fibrous, single fibres or fibre bundles.

## Revendications

1. Procédé pour la fabrication de corps moulés revêtus de feuilles ou corps moulés pelliplaqués, en particulier de corps moulés d'emballage, à partir d'un matériau biodégradable en utilisant une pâte ou masse visqueuse qui contient un matériau fibreux biodégradable avec des fibres longues ou des faisceaux de fibres ayant une longueur de fibres ou de faisceaux de fibres dans une plage de 10 mm jusqu'à 50 mm en combinaison avec des fibres courtes ou des faisceaux de fibres ayant une longueur de fibres ou de faisceaux de fibres de 0,5 à 20 mm, de l'eau et de l'amidon et masse visqueuse qui est cuite en formant un composite amidon- matériau fibreux dans un moule fermé, le rapport entre l'amidon et le matériau fibreux dans la masse se situant dans la plage de 15 % en poids à 200 % en poids, la cuisson s'effectuant pendant une durée entre 0,5 et 15 minutes pour une température de cuisson entre 105°C et 300°C, et le corps moulé pelliplaqué étant fabriqué au moins en partie en formant une couche marginale étanche aux liquides, biodégradable, la formation de la couche marginale s'effectuant par application d'un revêtement de feuilles ou pelliplacage hydrophobe sur le corps moulé cuit.

2. Procédé selon la revendication 1, **caractérisé en ce que** le revêtement s'effectue par immersion ou pulvérisation d'une solution hydrophobe ou par traitement thermique, en particulier par fusion d'une poudre ou granulat hydrophobe.

3. Procédé selon la revendication 1 ou 2, **caractérisé en ce que** le revêtement contient des dérivés de cellulose, et **en ce qu'**il consiste, en particulier, essentiellement en acétate de cellulose.

4. Procédé selon au moins l'une des revendications précédentes 1-3, **caractérisé en ce que** le revêtement contient de l'acétate d'amidon.

5. Procédé selon au moins l'une des revendications précédentes 1-4, **caractérisé en ce que** le revêtement s'effectue par application d'une feuille contenant de l'acétate de cellulose ou d'amidon sur le corps moulé cuit.

6. Procédé selon au moins l'une des revendications précédentes 1-5, **caractérisé en ce que** la formation de la couche marginale s'effectue par application d'un revêtement hydrophobe sur le corps moulé encore chaud avant l'opération de cuisson précédente, avec conditionnement simultané, de préférence par application du revêtement hydrophobe sous vapeur brûlante.

7. Procédé selon la revendication 6, **caractérisé en ce que** l'opération de revêtement s'effectue dans un dispositif de cuisson contenant le moule de cuisson.

8. Procédé selon au moins l'une des revendications précédentes 1-6, **caractérisé en ce que** le corps moulé est revêtu d'au moins une feuille constituée par des polymères-plastiques biodégradables.

9. Procédé selon au moins l'une des revendications précédentes 1-8, **caractérisé en ce qu'**une épaisseur du bord marginal étanche aux liquides, biodégradable, est de 5 µm-100 µm.

10. Procédé selon au moins l'une des revendications précédentes 1-9, **caractérisé en ce que** le corps moulé est muni à l'intérieur et/ou à l'extérieur d'une couche marginale formée par un revêtement étanche aux liquides.

11. Procédé selon au moins l'une des revendications précédentes 1-10, **caractérisé en ce que** le revêtement est appliqué sous forme de revêtement multiple.

12. Procédé selon au moins l'une des revendications précédentes 1-11, **caractérisé en ce que** la couche marginale en tant que couche barrière présente un effet barrière vis-à-vis des liquides, en particulier de l'eau, de l'acide lactique ainsi que des graisses.

13. Procédé selon la revendication 12, **caractérisé en ce que** la couche marginale forme essentiellement une couche barrière étanche aux liquides et aux gaz, en particulier **en ce qu'**elle forme un revêtement, de préférence étanche vis-à-vis de la vapeur d'eau, des acides et arômes.

14. Procédé selon au moins l'une des revendications précédentes 1-13, **caractérisé en ce qu'**une surface interne étanche aux liquides du corps moulé présente une résistance à l'humidité et/ou aux températures élevées et/ou une résistance aux graisses et/ou une étanchéité aux gaz ou aux arômes, ainsi qu'une surface extérieure du corps moulé.

15. Procédé selon au moins l'une des revendications précédentes 1-14, **caractérisé en ce que** le corps moulé est muni le long d'une surface intérieure d'un revêtement étanche aux liquides, d'une épaisseur supérieure à sa surface extérieure.

16. Procédé selon au moins l'une des revendications précédentes 1-15, **caractérisé en ce que** le corps moulé est cuit dans le moule de cuisson, **en ce qu'**il est consécutivement prélevé du moule de cuisson et **en ce qu'**il est placé à l'intérieur du dispositif de cuisson dans un autre dispositif pour l'application du revêtement étanche aux liquides.

17. Procédé selon au moins l'une des revendications précédentes 1-16, **caractérisé en ce que** la chaleur de processus du moule de cuisson, de préférence à l'intérieur du dispositif de cuisson, est utilisée pour chauffer le corps moulé et/ou un milieu hydrophobe à appliquer sur celui-ci pour un revêtement consécutif du corps moulé, de préférence à l'intérieur du dispositif de cuisson.

18. Procédé selon au moins l'une des revendications précédentes 1-16, **caractérisé en ce que** le corps moulé cuit, de préférence refroidi, est revêtu au moins partiellement par application d'une solution froide ou brûlante étanche aux liquides.

19. Procédé selon au moins l'une des revendications précédentes 1-16, **caractérisé en ce que** le corps moulé cuit, encore chaud sous l'effet de l'opération de cuisson précédente, est revêtu au moins partiellement d'une solution brûlante étanche aux liquides.

20. Procédé selon au moins l'une des revendications 18 ou 19, **caractérisé en ce que** la solution contient un matériau hydrophobe ainsi qu'un solvant, en particulier légèrement volatil.

21. Procédé selon au moins l'une des revendications précédentes 18-20, **caractérisé en ce que** la solution, de préférence froide, contient en tant que matière hydrophobe de l'acétate de cellulose et en tant que solvant de l'acétone ou de l'acétate d'éthyle, et **en ce qu'**elle est appliquée de préférence sur le corps moulé refroidi.

22. Procédé selon au moins l'une des revendications précédentes 18-20, **caractérisé en ce que** la solution contient en tant que matière hydrophobe de l'alginate et en tant que solvant de l'eau.

23. Procédé selon la revendication 22, **caractérisé en ce qu'**en tant que moyen de fixation, on utilise des composés de calcium, de préférence du chlorure de calcium.

24. Procédé selon au moins l'une des revendications précédentes 18-20, **caractérisé en ce que**, de préférence, la solution froide contient en tant que matière hydrophobe du carbonate de polyalkylène et en tant que solvant de l'acétone ou de l'acétate d'éthyle, et **en ce qu'**elle est appliquée sur le corps moulé, de préférence refroidi.

25. Procédé selon au moins l'une des revendications précédentes 18-20, **caractérisé en ce que** la solution, de préférence brûlante, contient en tant que matière hydrophobe des polyesters et dérivés de polyesters biodégradables et qui sont produits biologiquement ou synthétiquement et, de préférence, la solution brûlante contient en tant que solvant du chloroforme, de l'acétone ou de l'acétate d'éthylène.

26. Procédé selon au moins l'une des revendications précédentes 18-20, **caractérisé en ce que** la solution, de préférence froide, contient en tant que matière hydrophobe de la nitrocellulose et en tant que solvant de l'acétate d'éthyle ou de l'acétate de butyle.

27. Procédé selon au moins l'une des revendications précédentes 18-20, **caractérisé en ce que** la solution, de préférence froide, contient en tant que matière hydrophobe de l'alcool de polyvinyle et en tant que solvant de l'acétate d'éthyle, de l'eau ou de l'acétone, et **en ce qu'**elle est appliquée sur le corps moulé, de préférence refroidi.

28. Procédé selon au moins l'une des revendications précédentes 18-20, **caractérisé en ce que** la solution, de préférence froide, contient en tant que matière hydrophobe de la polycabrolactone et en tant que solvant du chloroforme, et **en ce qu'**elle est appliquée sur le corps moulé, de préférence refroidi.

29. Procédé selon au moins l'une des revendications précédentes 18-20, **caractérisé en ce que** la solution, de préférence froide, contient en tant que matière hydrophobe de l'acétate de polyvinyle et en tant que solvant de l'acétone ou de l'acétate d'éthyle, et **en ce qu'**elle est appliquée sur le corps moulé, de préférence refroidi.

30. Procédé selon au moins l'une des revendications précédentes 1-17, **caractérisé en ce que** sur le corps moulé, de préférence chaud, on applique de la poudre, du granulat ou des boulettes qui sont préparées synthétiquement ou biologiquement et des dérivés de polyester et de polyester biodégradable, en particulier polycaprolactone, polyhydroxybutyrate, polyhydroxybutyrate/hydroxyvalérate-copolymères et/ou polyalkylsuccinate, et **en ce qu'**on les lie en adhérence interne avec le corps moulé.

31. Procédé selon la revendication 30, **caractérisé en ce que** l'application s'effectue par poudrage, pulvérisation de matière de revêtement ou par immersion du corps moulé dans la matière de revêtement.

32. Procédé selon la revendication 30 ou 31, **caractérisé en ce que** l'application s'effectue par fusion.

33. Procédé selon au moins l'une des revendications précédentes 30-32, **caractérisé en ce que** le revêtement appliqué sur le corps moulé est consécutivement sollicité par une pression- compression de surface.

34. Procédé selon au moins l'une des revendications précédentes 1-33, **caractérisé en ce que** le revêtement étanche aux liquides est appliqué en utilisant un agent de pontage ou agent conférant de l'adhésivité entre le corps moulé et le revêtement sur le corps moulé, de préférence en utilisant de la nitrocellulose ou de l'acétate de polyvinyle ou de l'alcool de polyvinyle en tant qu'agent conférant de l'adhésivité.

35. Procédé selon au moins l'une des revendications précédentes 1-34, **caractérisé en ce que**, consécutivement à la formation de la couche marginale étanche aux liquides, en particulier consécutivement au revêtement étanche aux liquides du corps moulé, on effectue un conditionnement à la vapeur, en particulier avec de la vapeur brûlante.

36. Procédé selon au moins l'une des revendications précédentes 30-35, **caractérisé en ce que** l'on pulvérise sur le corps moulé, en particulier brûlant, une poudre pour la formation d'un revêtement étanche aux liquides sur le corps moulé en utilisant de la vapeur brûlante pour la liaison de l'opération de conditionnement et de revêtement.

37. Procédé selon au moins l'une des revendications précédentes 1-17, **caractérisé en ce que** le corps moulé est revêtu au moins partiellement d'une feuille biodégradable consécutivement à la cuisson du corps moulé.

38. Procédé selon la revendication 37, **caractérisé en ce que** la feuille consiste en acétate de cellulose, verre cellulaire ou dérivés de polyester ou polyesters biodégradables, préparés biologiquement ou synthétiquement, en particulier en polycaprolactone.

39. Procédé selon la revendication 38, **caractérisé en ce que** la feuille, en particulier en utilisant un agent conférant de l'adhésivité, est liée sous vide, par air comprimé ou pression mécanique, avec le corps moulé cuit.

40. Procédé selon au moins l'une des revendications précédentes 37-39, **caractérisé en ce qu'**il est réalisé une découpe de la feuille sur le corps moulé revêtu après enlèvement de celle-ci en combinaison avec une séparation de résidus de matières qui proviennent de canaux d'évaporation du moule de cuisson.

41. Procédé selon au moins l'une des revendications précédentes 37-40, **caractérisé en ce que** consécutivement à la formation de la couche marginale étanche aux liquides, on effectue consécutivement une stérilisation du corps moulé avec de la vapeur brûlante.

42. Procédé selon au moins l'une des revendications précédentes 1-41, **caractérisé en ce que** le corps moulé est cuit et consécutivement conditionné à la vapeur d'eau, après conditionnement un agent conférant de l'adhésivité est appliqué et subséquemment on applique le revêtement étanche aux liquides, et le corps moulé revêtu est ensuite soumis à une stérilisation à la vapeur brûlante.

43. Procédé selon au moins l'une des revendications précédentes 1-41, **caractérisé en ce que** le corps moulé est conditionné après la cuisson avec de la vapeur d'eau et consécutivement il est muni directement d'un revêtement étanche aux liquides et stérilisé consécutivement à la vapeur brûlante.

44. Procédé selon au moins l'une des revendications précédentes 1-41, **caractérisé en ce que** l'on ajoute directement la matière assurant la couche marginale étanche aux liquides d'une masse de cuisson pour la cuisson du corps moulé et on procède au mélange dans celle-ci, et après l'opération de cuisson, le corps moulé est conditionné et stérilisé à la vapeur brûlante.

45. Procédé selon au moins l'une des revendications 1-44, **caractérisé en ce que**, pour la formation du matériau fibreux, on utilise de la matière brute contenant des fibres qui sont broyées, en particulier après broyage préalable.

46. Procédé selon au moins l'une des revendications précédentes 1-45, **caractérisé en ce que** la matière première contenant les fibres est constituée de vieux papiers, de matériaux de recyclage, en particulier de vieux papiers décolorés, de matières de fibres biodégradables telles que des déchets industriels contenant des fibres de cellulose, en particulier des morceaux de betteraves, des déchets de bois ou de papier ou analogues.

47. Procédé selon au moins l'une des revendications précédentes 1-46, **caractérisé en ce que** le matériau fibreux consiste directement en fibres biodégradables ou en faisceaux de fibres.

48. Procédé selon la revendication 47, **caractérisé en ce que** les fibres ou faisceaux de fibres présentent une longueur dans la plage de 0,5 mm à 5 mm.

49. Procédé selon au moins l'une des revendications précédentes 1-48, **caractérisé en ce qu'**en tant qu'amidon on utilise de l'amidon natif et/ou prégélatinisé.

50. Procédé selon au moins l'une des revendications précédentes 1-49, **caractérisé en ce que**, pour la formation de la masse visqueuse, on ajoute de l'eau dans un rapport allant jusqu'à environ 8:1, de préférence 2,5:1, rapporté à la masse sèche de la matière première contenant les fibres, en particulier du vieux papier.

51. Procédé selon la revendication 49, **caractérisé en ce que** la partie d'amidon modifié ou prégélatinisé consiste sur la partie d'amidon globale à l'intérieur de la masse visqueuse d'environ 30 % en poids.

52. Procédé selon au moins l'une des revendications précédentes 1-51, **caractérisé en ce que** la proportion entre l'amidon et l'eau dans la masse visqueuse est d'environ 1:10 jusqu'à environ 1:1, de préférence 1:3 jusqu'à 1:2, et on ajoute de l'eau pour la formation de la masse visqueuse consécutivement sous forme d'amidon prégélatinisé avec excédent d'eau ou amidon modifié.

53. Procédé selon au moins l'une des revendications précédentes 1-52, **caractérisé en ce que**, dans la masse visqueuse, la proportion entre le matériau fibreux est de 15 % jusqu'à 30 % en poids, la proportion d'amidon de 5 % en poids jusqu'à 40 % en poids, la proportion d'eau 70 % en poids jusqu'à 40 % en poids.

54. Procédé selon la revendication 52, **caractérisé en ce que**, dans la masse visqueuse, la proportion d'amidon prégélatinisé ou modifié est de 1 % en poids jusqu'à 10 % en poids.

55. Procédé selon au moins l'une des revendications précédentes 1-54, **caractérisé en ce que** la matière première contenant des fibres, en particulier du vieux papier, est broyée et consécutivement en présence d'eau et addition d'amidon, de préférence d'amidon natif, et elle est ramenée à une structure fibreuse, et l'on forme une masse visqueuse moulable et **en ce que** l'on procède ensuite à sa cuisson.

56. Procédé selon au moins l'une des revendications précédentes 1-55, **caractérisé en ce que** la matière brute contenant des fibres, en particulier du vieux papier, est broyée en présence d'eau et consécutivement en ajoutant de l'amidon, de préférence de l'amidon natif, et elle est ramenée à sa structure de fibre, et l'on forme la masse visqueuse moulable et on procède consécutivement à la cuisson de celle-ci.

57. Procédé selon au moins l'une des revendications précédentes 1-56, **caractérisé en ce que**, avant la cuisson de la masse visqueuse, on procède au dosage de celle-ci.

58. Procédé selon au moins l'une des revendications précédentes 1-57, **caractérisé en ce que** la matière première contenant des fibres ou le matériau fibreux directement utilisé est soumise à un examen en ce qui concerne la longueur de fibres ainsi que la proportion d'amidon, et il est classé avant ou après l'opération de broyage.

59. Procédé selon la revendication 49, **caractérisé en ce que** l'amidon natif est ajouté partiellement pendant le broyage de la matière première contenant des fibres, en particulier comme prémélange avec des matières de charge.

60. Procédé selon au moins l'une des revendications précédentes 1-59, **caractérisé en ce que** l'amidon est ajouté à la matière première contenant des fibres, au moins partiellement, pendant l'opération de broyage et/ou une opération consécutive de mélange par voie sèche ou humide et/ou pendant une opération de malaxage et mélange d'égalisation consécutive en tant qu'amidon natif et/ou modifié, en particulier prégélatinisé.

61. Procédé selon au moins l'une des revendications précédentes 1-60, **caractérisé en ce que** l'amidon est mis en oeuvre en tant qu'amidon prégélatinisé et en tant qu'amidon natif et **en ce que** l'on ajoute au moins une matière de charge à l'amidon natif avant l'introduction dans le processus de broyage de la matière première contenant des fibres ou au cours du processus de malaxage et mélange d'égalisation consécutif.

62. Procédé selon la revendication 60 ou 61, **caractérisé en ce que** l'amidon prégélatinisé est ajouté directement dans le processus de mélange et de malaxage pour la formation de la masse visqueuse.

63. Procédé selon au moins l'une des revendications précédentes 1-62, **caractérisé en ce que** la formation de la masse visqueuse s'effectue en utilisant la matière première contenant des fibres de différentes qualités de broyage et de différentes longueurs de fibres.

64. Procédé selon au moins l'une des revendications précédentes 1-63, **caractérisé en ce qu'**avant le remplissage de la masse dans le moule de cuisson, on procède au chauffage de celui-ci.

65. Procédé selon au moins l'une des revendications 1-64, **caractérisé en ce qu'**au moins deux plaques de cuisson du moule de cuisson, au début de l'opération de cuisson, sont verrouillées entre elles pour assurer un écart constant entre la plaque de cuisson supérieure et inférieure pendant l'opération de cuisson, moyennant quoi la distance entre les surfaces internes dirigées l'une vers l'autre des plaques de cuisson, entre lesquelles se trouve la masse, détermine une épaisseur de paroi du corps moulé cuit.

66. Procédé selon au moins l'une des revendications précédentes 1-65, **caractérisé en ce que** pendant l'opération de cuisson s'effectue l'évacuation contrôlée de la vapeur d'eau depuis le moule de cuisson.

67. Procédé selon la revendication 66, **caractérisé en ce que** l'évacuation de la vapeur d'eau à partir de l'espace creux du moule de cuisson s'effectue de façon commandée dans le temps et/ou dans le lieu et/ou commandée en pression interne.

68. Procédé selon au moins l'une des revendications précédentes 1-67, **caractérisé en ce qu'**après la fermeture et le verrouillage des plaques de cuisson du moule de cuisson au début de l'opération de cuisson, on procède à une recompression de la masse visqueuse dans le moule de cuisson.

69. Procédé selon au moins l'une des revendications précédentes 1-64, 66-68, **caractérisé en ce que** le procédé de cuisson s'effectue en réduisant la distance entre la plaque de cuisson supérieure et inférieure du moule de cuisson.

70. Procédé selon au moins l'une des revendications précédentes 1-69, **caractérisé en ce que**, pour le corps moulé de grande épaisseur et/ou de grande surface, on utilise des fibres longues ou des faisceaux de fibres jusqu'à 50 mm de longueur.

71. Corps moulé, en particulier corps moulé pour emballage, en matériau fibreux biodégradable, constitué par un matériau fibreux biodégradable, de l'amidon et le reste d'eau, préparé selon le procédé selon au moins l'une des revendications précédentes 1-70, **caractérisé en ce que** le corps moulé présente un mélange de fibres longues ou de faisceaux de fibres ayant une longueur de fibres ou de faisceaux de fibres de 10 mm jusqu'à 50 mm et de fibres ou de faisceaux de fibres courtes avec une longueur de fibres ou de faisceaux de fibres de 0,5 mm jusqu'à 20 mm, ainsi qu'au moins sur un côté un revêtement de feuilles hydrophobes biodégradables appliquées sur un côté du corps de moulage cuit en tant que couche marginale étanche aux liquides.

72. Corps moulé selon la revendication 71, **caractérisé en ce que** la couche marginale présente un revêtement appliqué avec un matériau hydrophobe, en particulier de l'acétate de cellulose, de l'alginate, du chlorure de calcium, du polyalkylènecarbonate, du biopolyester, de la polycaprolactone, de l'acétate de polyvinyle, de la nitrocellulose ou de l'alcool de polyvinyle.

73. Corps moulé selon la revendication 72, **caractérisé en ce que** le corps moulé est revêtu sur tous les côtés.

74. Corps moulé selon au moins l'une des revendications 71-73, **caractérisé en ce que** le corps moulé présente une structure interne poreuse qui est fermée par une couche pelliculaire périphérique, et la couche pelliculaire porte, de préférence avec une couche intercalée d'agent conférant de l'adhésivité, le revêtement étanche aux liquides.

75. Corps moulé selon la revendication 71, **caractérisé en ce que** le corps moulé contient, à l'intérieur d'un composite amidon- matériau fibreux, un matériau étanche aux liquides dispersé dans celui-ci.

76. Corps moulé selon la revendication 71, **caractérisé en ce que** le revêtement est une feuille en matière synthétique biodégradable, en particulier à base de dérivés de polyester.

77. Corps moulé selon au moins l'une des revendications précédentes 71-77, **caractérisé en ce que**, pour des corps moulés à paroi épaisse et/ou de grande surface, on utilise de préférence des fibres ou des faisceaux de fibres longues jusqu'à 50 mm de longueur, en particulier des fibres ou des faisceaux de fibres ayant une longueur de fibres ou de faisceaux de fibres dans la plage de 10 mm jusqu'à 50 mm en mélange avec des fibres ou faisceaux de fibres courtes ayant une longueur de fibres ou de faisceaux de fibres de 0,5 mm jusqu'à 20 mm.

78. Corps moulé selon au moins l'une des revendications précédentes 71-77, **caractérisé en ce que** la proportion de matériau fibreux par rapport à l'amidon est de 4:1 jusqu'à 1:2.

79. Corps moulé selon au moins l'une des revendications précédentes 71-78, **caractérisé en ce que** le corps moulé contient une quantité d'amidon prégélatinisé.

80. Corps moulé selon au moins l'une des revendications précédentes 71-79, **caractérisé en ce que** le corps moulé contient un mélange à partir notamment de faisceaux de fibres longues, démêlées, en particulier de faisceaux de fibres ou de fibres individuelles courtes.
